(19) Europäisches Patentamt
European Patent Office
Office européen des brevets

(11) **EP 3 360 626 B1**

(12) **EUROPEAN PATENT SPECIFICATION**

(45) Date of publication and mention
of the grant of the patent:
**25.09.2019 Bulletin 2019/39**

(21) Application number: **16885449.5**

(22) Date of filing: **16.12.2016**

(51) Int Cl.:
*B22F 3/105* (2006.01)    *B29C 64/153* (2017.01)
*B29C 64/268* (2017.01)    *B33Y 30/00* (2015.01)

(86) International application number:
**PCT/JP2016/087653**

(87) International publication number:
**WO 2018/109943 (21.06.2018 Gazette 2018/25)**

(54) **THREE-DIMENSIONAL-SHAPING DEVICE**

VORRICHTUNG ZUM DREIDIMENSIONALEN FORMEN

DISPOSITIF DE MISE EN FORME TRIDIMENSIONNELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.08.2018 Bulletin 2018/33**

(73) Proprietor: **Technology Research Association for
Future
Additive Manufacturing
Chuo-ku, Tokyo (JP)**

(72) Inventor: **GOTO Kazuya
Akishima-shi
Tokyo 196-8558 (JP)**

(74) Representative: **TBK
Bavariaring 4-6
80336 München (DE)**

(56) References cited:
**EP-A1- 3 059 031        WO-A1-2016/103493
US-A1- 2005 186 538    US-A1- 2015 017 055**

**Description**

TECHNICAL FIELD

The present invention relates to a three-dimensional shaping apparatus, a control method of the three-dimensional shaping apparatus, and a control program of the three-dimensional shaping apparatus.

BACKGROUND ART

In the above technical field, patent literature 1 discloses a three-dimensional product manufacturing apparatus that scans powder with an electron beam, and patent literature 2 discloses a similar apparatus.

CITATION LIST

PATENT LITERATURE

Patent literature 1: Japanese PCT National Publication No. 2003-531034 (WO 2001/081031)
Patent literature 2: EP3059031 A1 (WO 2016/087653)

SUMMARY OF THE INVENTION

TECHNICAL PROBLEM

In the technique described in the above literature, however, it is impossible to prevent excessive evaporation of the powder, the evaporation resulting from the electron beam heating only the superficial part of a layer that consists of the powder.
The present invention provides a technique of solving the above-described problem.

SOLUTION TO PROBLEM

One aspect of the present invention provides a three-dimensional shaping apparatus according to claim 1.

ADVANTAGEOUS EFFECTS OF INVENTION

The present invention prevents excessive evaporation of the powder.

BRIEF DESCRIPTION OF DRAWINGS

Fig. 1 is a view explaining the configuration of a three-dimensional shaping apparatus according to the first exemplary embodiment of the present invention;
Fig. 2 is a view explaining how a small region in the sub-deflection field is scanned and irradiated with the electron beam in the first melting step according to the first exemplary embodiment of the present invention;
Fig. 3 is a view explaining how small regions to be scanned and irradiated with the electron beam in the first melting step are arranged on the shaping plane according to the first exemplary embodiment of the present invention;
Fig. 4 is a view explaining how the entire region in the sub-deflection field is scanned and irradiated with the electron beam in the second melting step according to the first exemplary embodiment of the present invention;
Fig. 5A is a graph explaining the temperature distribution in the sub-deflection field after the first melting step according to the first exemplary embodiment of the present invention;
Fig. 5B is a graph explaining the temperature distribution in the sub-deflection field after the second melting step according to the first exemplary embodiment of the present invention;
Fig. 6 is a view explaining how the first, second, and third columns of the small regions in the sub-deflection field are scanned and irradiated with the electron beam in the second melting step according to the first exemplary embodiment of the present invention;
Fig. 7 is a view showing a calculation model for calculating the temperature distribution of the power layer in the depth direction and the time transition of the temperature distribution, the layer being scanned and irradiated by the three-dimensional shaping apparatus according to the first exemplary embodiment of the present invention;

Fig. 8A is a graph showing the relationship between the temperature of a layered material (pure metal) scanned and irradiated by the three-dimensional shaping apparatus and the unit-volume heat given to the layered material according to the first exemplary embodiment of the present invention;

Fig. 8B is a graph showing the relationship between the temperature of a layered material (alloy) scanned and irradiated by the three-dimensional shaping apparatus and the unit-volume heat given to the layered material according to the first exemplary embodiment of the present invention;

Fig. 9 is a timing chart showing the time transitions of the temperatures of the outermost and deepest parts of the layered material given multiple scanning and irradiation by the three-dimensional shaping apparatus, with the melting step not being divided into two steps, according to the first exemplary embodiment of the present invention;

Fig. 10A is a timing chart showing the time transitions, in the first melting step, of the temperatures of the outermost and deepest parts of the layered material scanned and irradiated by the three-dimensional shaping apparatus according to the first exemplary embodiment of the present invention;

Fig. 10B is a timing chart showing the time transitions, in the second melting step, of the temperatures of the outermost and deepest parts of the layered material scanned and irradiated by the three-dimensional shaping apparatus according to the first exemplary embodiment of the present invention;

Fig. 11A is a flowchart explaining a procedure of shaping a three-dimensional structure by the three-dimensional shaping apparatus according to the first exemplary embodiment of the present invention;

Fig. 11B is a flowchart explaining a procedure of the scanning and irradiation with the electron beam, the procedure being a part of the procedure of shaping the three-dimensional structure by the three-dimensional shaping apparatus according to the first exemplary embodiment of the present invention;

Fig. 12A is a view showing the configuration of a three-dimensional shaping apparatus according to the technical premise of the first exemplary embodiment of the present invention; and Fig. 12B is a flowchart explaining a procedure of shaping a three-dimensional structure by the three-dimensional shaping apparatus according to the technical premise of the first exemplary embodiment of the present invention.

DESCRIPTION OF EXAMPLE EXEMPLARY EMBODIMENTS

Exemplary embodiments of the present invention will now be described in detail with reference to the drawings. It should be noted that the relative arrangement of the components, the numerical expressions, and the numerical values set forth in these exemplary embodiments do not limit the scope of the present invention unless stated otherwise specifically.

[First Exemplary Embodiment]

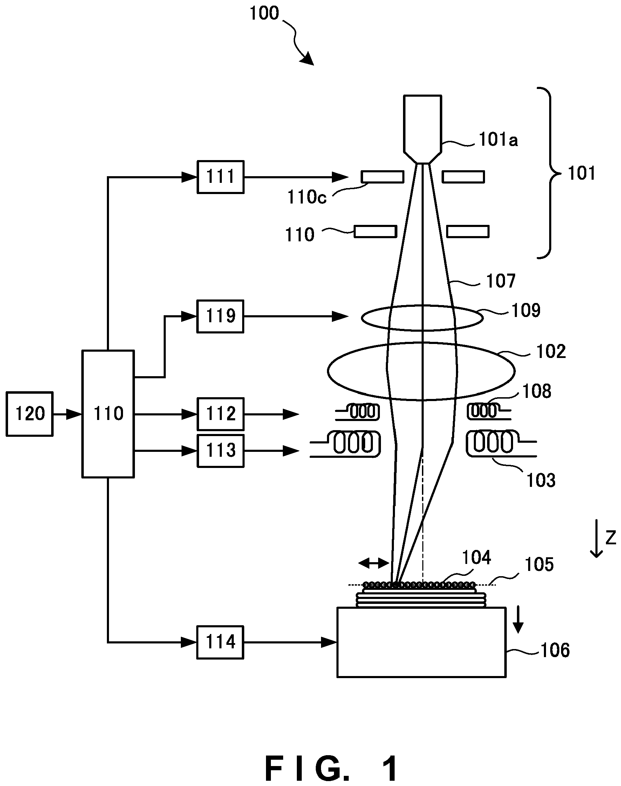

A three-dimensional shaping apparatus 100 according to the first exemplary embodiment of the present invention will be described with reference to Figs. 1 to 12B.

<Technical Premise>

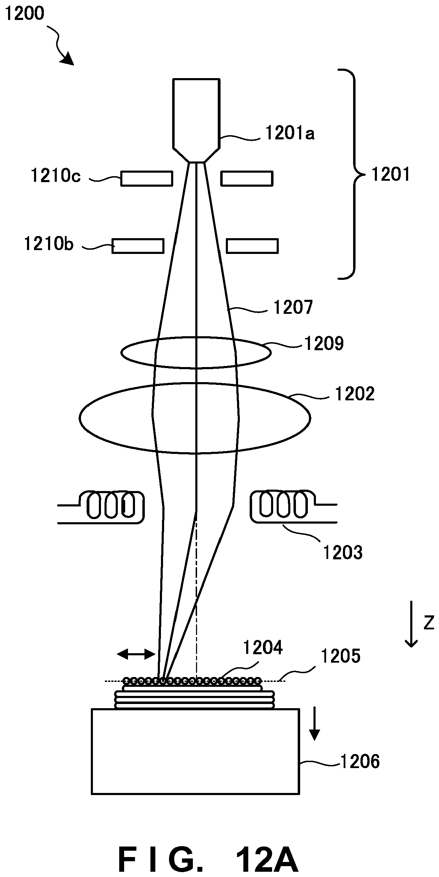

A technical premise of this exemplary embodiment will be described first. Fig. 12A is a view explaining the configuration of a three-dimensional shaping apparatus 1200 according to the technical premise of the three-dimensional shaping apparatus 100 according to this exemplary embodiment. The three-dimensional shaping apparatus 1200 is an electron beam three-dimensional shaping apparatus, which shapes three-dimensional structures using an electron beam. The three-dimensional shaping apparatus 1200 shapes a desired three-dimensional structure by melting and solidifying metal powder 1204 by the focused electron beam 1207, and sequentially laminating the metal powder.

As shown in Fig. 12A, the three-dimensional shaping apparatus 1200 includes an electron gun 1201, a lens 1202, a deflector 1203, and a focus corrector 1209. The electron gun 1201 is a thermoelectron emission electron gun, the lens 1202 is an electromagnetic lens, and the deflector 1203 is an electromagnetic deflector. The deflector 1203 consists of a set of X-direction deflection coils and a set of Y-direction deflection coils. The focus corrector 1209 is an electromagnetic lens, as with the lens 1202. The three-dimensional shaping apparatus 1200 further includes a mechanism (not shown) for spreading the metal powder 1204 over the shaping plane 1205, and a Z-axis stage 1206 for setting the height position of the metal powder 1204 at the height of the shaping plane 1205.

With the above configuration, first, the three-dimensional shaping apparatus 1200 spreads the metal powder 1204 over the shaping plane 1205. That is, the three-dimensional shaping apparatus 1200 forms a powder layer consisting of the metal powder 1204. The particle size (diameter) of the metal powder 1204 is mostly several tens of microns.

Second, the three-dimensional shaping apparatus 1200 causes the electron gun 1201 to generate the electron beam 1207, causes the lens 1202 to focus the electron beam 1207 so that the cross-sectional diameter of the electron beam 1207 becomes smallest on the shaping plane1205, and causes the deflector 1203 to deflect the electron beam 1207 in the two-dimensional (X and Y) directions, thereby scanning and irradiating predetermined regions on the shaping plane1205.

Deflection of the electron beam 1207 by the deflector 1203 generates deflection aberrations, mainly field curvature, astigmatism, and distortion. Among these aberrations, the field curvature is corrected the focus corrector 1209. The correction of the field curvature is dynamic correction per deflection coordinate. The astigmatism is corrected by an astigmatism corrector (not shown), and the distortion is corrected by superimposing a distortion correction signal onto the deflection signal input to the deflector 1203. The correction of these aberrations also is dynamic correction per deflection coordinate. The astigmatism and distortion will hereinafter be given no further explanation.

The above mentioned scanning and irradiation heats the metal powder 1204 in the predetermined regions. More specifically, the metal powder 1204 in the regions is preheated (preliminarily sintered), and then melted. Here, the deflector 1203 is controlled based on data representing the shape of the desired three-dimensional structure (shape data) and data representing shaping conditions (shaping condition data). The process steps of preheating and melting the metal powder 1204 will hereinafter be simply referred to as the preheating and melting steps, respectively.

The metal powder 1204 melted in the preheating and melting steps then is solidified and forms a thin metal layer as part of the desired three-dimensional structure. The metal layer is no longer a powder layer, but is a continuous structure. Therefore, the desired three-dimensional structure is shaped by repeating the above process steps of laminating such layers. Note here that this requires one to, before newly spreading the metal powder 1204 over the metal layer, compensate for the height of the structure in process by the thickness of the metal layer.

Third, the three-dimensional shaping apparatus 1200, for the above requirement, moves the Z-axis stage 1206 by the thickness of the metal layer. The thickness, that is, the moving step of the Z-axis stage 1206, in typical electron beam three-dimensional shaping apparatuses is about 100 $\mu$m. Therefore, the thickness of the powder layer consisting of the metal powder 1204 spread over the shaping plane 1205 also is about 100 $\mu$m. The movable range of the Z-axis stage 1206, that is, the maximum shaping depth is several hundreds of millimeters.

The most important performance indices of the three-dimensional shaping apparatus 1200 include the shaping resolution and the shaping speed. The shaping resolution of the three-dimensional shaping apparatus 1200 is determined by the cross-sectional diameter of the electron beam 1207 on the shaping plane 1205. The shaping speed of the three-dimensional shaping apparatus 1200 is, regardless of the cross-sectional diameter of the electron beam 1207, proportional to the power of the electron beam 1207. Note that the shaping speed mentioned here does not take account of the operation of the Z-axis stage 1206.

The reasons why the shaping speed of the three-dimensional shaping apparatus 1200 is proportional to the power of the electron beam 1207 are as follows. First, the volume [cm$^3$] of a structure shaped by the three-dimensional shaping apparatus 1200 is proportional to heat [J] given by the electron beam 1207 to the structure. Second, the shaping speed [cm$^3$/s] (or [cm$^3$/h]) of the three-dimensional shaping apparatus 1200 is the time derivative of the volume of the structure. Third, the power [W] of the electron beam 1207 is the time derivative of the heat given to the structure. Here, the first reason assumes that unit-area heat given by the electron beam 1207 to the metal powder 1204 is uniform, and the third reason assumes that the power of the electron beam 1207 is supplied to the metal powder 1204 without loss. These assumptions are also applied to the following descriptions.

Since the shaping speed of the three-dimensional shaping apparatus 1200 is, as described above, proportional to the power of the electron beam 1207, one can increase the shaping speed by increasing the power of the electron beam 1207. However, this requires one to simultaneously increase the speed of the scanning with the electron beam 1207. This is because, first, the volume is proportional to the distance of the scanning with the electron beam 1207 and, second, the time derivative of the distance is the speed of the scanning with the electron beam 1207.

The power of the electron beam 1207 is the multiplication product of the acceleration voltage and the current of the electron beam 1207. The acceleration voltage of the electron beam 1207 is a voltage between the cathode 1201a and the anode 1201b in Fig. 12A. The acceleration voltage of the electron beam in typical electron beam three-dimensional shaping apparatuses is several tens of kilovolts.

A general way to increase the power of the electron beam 1207 is by increasing the current of the electron beam 1207. The current of the electron beam 1207 is controlled by adjusting the bias voltage of the electron gun 1201. The bias voltage is the voltage between the cathode 1201a and the grid 1201c in Fig. 12A.

The current of the electron beam 1207 may contrarily be set small. This applies to a case in which the shaping resolution is prioritized over the shaping speed. That is, the cross-sectional diameter of the electron beam 1207 is decreased by decreasing the current of the electron beam 1207. This is because the aperture angle of the electron beam 1207 on the shaping plane 1205 decreases along with a decrease in the current of the electron beam 1207, resulting in small aberrations caused by the lens 1202. Note here that even when a high shaping resolution is required, a higher shaping speed is preferred, and thus a higher current of the electron beam 1207 is ideal.

The control of the current by the bias voltage is also performed to completely shut off the electron beam 1207 and thereby set its current to zero. The process steps in which the current of the electron beam 1207 is set to zero, that is, the process step in which the electron beam 1207 is unnecessary, include the process step of spreading the metal powder 1204 over the shaping plane 1205 and the process step of moving the Z-axis stage 1206.

The shaping speed of the three-dimensional shaping apparatus 1200 being high, that is, the power of the electron beam 1207 being high and the speed of the scanning with the electron beam 1207 also being high, means that the time during which each point in the region scanned with the electron beam 1207 is irradiated is short. This time mentioned here is the quotient of the cross-sectional diameter of the electron beam 1207 divided by the speed of the scanning with the electron beam 1207, and is also the quotient the unit-area heat given to the metal powder 1204 divided by the unit-area power of the electron beam 1207. That is, the time during which each point in the region scanned with the electron beam 1207 is irradiated is inversely proportional to the speed of the scanning with the electron beam 1207 and is proportional to the unit-area heat given to the metal powder 1204.

The above unit-area heat is, in the preheating step, the amount of heat required per unit area to raise the temperature of the metal powder 1204 from an initial temperature to a preheating temperature, and is also, in the melting step, the sum of the amount of heat required per unit area to raise the temperature of the metal powder 1204 from the preheating temperature to a target temperature and the amount of heat required per unit area to melt the metal powder 1204. Here, melting of the metal powder 1204 refers to that of the metal powder 1204 as a result of its absorbing the melting heat (latent heat) at its melting point.

The above unit-area power is also the quotient of the power of the electron beam 1207 divided by the cross-sectional diameter of the electron beam 1207. Therefore, the unit-area power increases when the power of the electron beam 1207 is increased to increase the shaping speed, when the cross-sectional diameter of the electron beam 1207 is decreased to increase the shaping resolution, or when the power of the electron beam 1207 is increased and the cross-sectional diameter of the electron beam 1207 is decreased to increase both the shaping speed and the shaping resolution.

Added to the above explanations is that, from the inversely and directly proportional relationships mentioned above, the unit-area heat given by the electron beam 1207 to the metal powder 1204 increases or decreases depending on the speed of the scanning with the electron beam 1207. Therefore, whether or not to melt the metal powder 1204 can be controlled by the scanning speed. That is, the metal powder 1204 melts when the scanning speed is decreased, and does not melt when the scanning speed is increased.

The above fact is an advantage in the melting step. This is because the scans of regions where the metal powder 1204 is melted include, unless the entire scan of the regions to be scanned altogether can be a single continuous scan, scans of regions where the metal powder 1204 is not melted. That is, in the melting step, the metal powder 1204 in the region where the metal powder 1204 is not supposed to be melted can be given nonzero unit-area heat, which can lead to unnecessarily melting of the metal powder 1204, but such unnecessary melting can be prevented by setting the scanning speed of the region where the metal powder 1204 is not supposed to be melted to be higher than for the region where the metal powder 1204 is melted.

The unnecessary melting can be theoretically prevented by current control of the electron beam 1207, which control is by changing the bias voltage or by blanking of the electron beam 1207. However, such control is difficult in most cases. The reason why current control of the electron beam 1207 by changing the bias voltage is difficult is that it is difficult to change the bias voltage at a high speed because the bias voltage is generally as high as several kilovolts. If it takes a long time to change the current for the above reason, the shaping speed decreases. Compared with the change in the current, the change in the scanning speed can be made extremely fast. The reason why the blanking of the electron beam 1207 is difficult is that the current of the electron beam 1207 is high enough to melt metal objects, and thus deflecting the electron beam 1207, even if temporarily, to make it incident on a shielding plate (metal) or the like can cause thermal damage to it and its surroundings.

The Preheating and melting of the powder layer consisting of the metal powder 1204 are not completed only by scanning and irradiating the powder layer with the electron beam 1207. More specifically, the preheating and melting of the powder layer require that heat given by the scanning and irradiation of the powder layer to the heat generating part (superficial part) of the powder layer by the scan and irradiation operations of the powder layer is diffused to a deeper part of the powder layer. This is because in most cases the thickness of the heat generating part is smaller than that of the powder layer. The thickness of the heat generating part is several microns to several ten microns when the acceleration voltage of the electron beam 1207 is several tens of kilovolts. In contrast, the thickness of the powder layer is about 100 μm, as described above.

The preheating and melting of the powder layer requiring thermal diffusion can prevent one from increasing the unit-area power of the electron beam 1207 so as to improve the shaping speed, resolution, or both of the three-dimensional shaping apparatus 1200. This depends on the relationship between the time during which each point scanned with the electron beam 1207 is irradiated and the time taken for the thermal diffusion. If the former time is shorter than the latter time, that is, if the unit-area power of the electron beam 1207 is accordingly increased, the heat given to the superficial part of the powder layer can, without waiting for the thermal diffusion, melt and evaporate only the superficial part and its vicinity.

The metal powder 1204 can evaporate regardless of whether or not its temperature exceeds its melting point. More specifically, the evaporation amount increases exponentially with respect to the rising temperature. The evaporation cannot be avoided as long as the metal powder 1204 is heated. If the evaporation amount is excessive, the following problems become conspicuous.

First, the thickness of the metal layer formed by the melting and solidification of the metal powder 1204 decreases. Second, an evaporated metal film is formed on the inner wall of the three-dimensional shaping apparatus 1200, and thus its inside becomes contaminated. The increase in the thickness of the film increases the ease with which it flakes off, and when it flakes off, it prevents the metal powder 1204 beneath it from being irradiated and heated as expected. Third, along with the evaporation of the superficial part of the powder layer, the heat that should have been given to the layer thickness of from the outermost to the deepest part of the power layer is dissipated outward, and thus a deeper part of the power layer cannot be given the heat necessary for its melting. If the deeper part of the powder layer is not melted, it becomes impossible to form a structure continuous in the depth direction (Z direction). If, as a solution to the problem, the unit-area power of the electron beam 1207 is increased to give sufficient heat to the deeper part of the powder layer, the temperature of the superficial part of the powder layer rises even further, which consequently accelerates the evaporation.

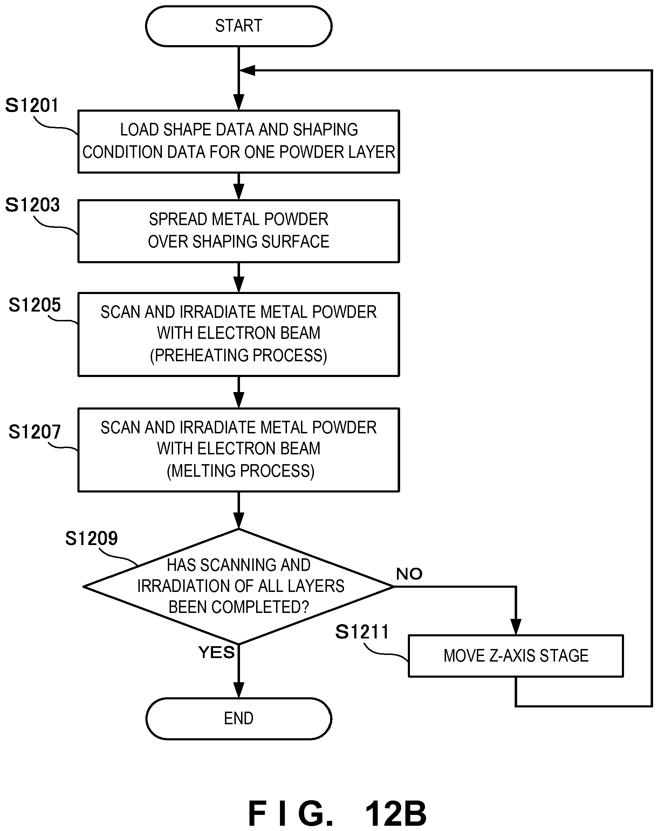

A procedure of shaping the three-dimensional structure by the three-dimensional shaping apparatus 1200 will be described with reference to Fig. 12B. Fig. 12B is a flowchart explaining the procedure of shaping a three-dimensional structure with the three-dimensional shaping apparatus 1200.

In step S1201, the three-dimensional shaping apparatus 1200 loads the shape data and shaping condition data for a single powder layer. In step S1203, the three-dimensional shaping apparatus 1200 spreads the metal powder 1204 over the shaping plane 1205, thereby forming a powder layer consisting of the metal powder 1204. In step S1205, to preheat the metal powder 1204 in a predetermined region (or the entire region) on the shaping plane 1205, the three-dimensional shaping apparatus 1200 scans and irradiates the region by causing the deflector 1203 to deflect the electron beam 1207 (preheating step). During this step, the three-dimensional shaping apparatus 1200 dynamically corrects the field curvature caused by the deflection of the electron beam 1207. In step S1207, to melt the metal powder 1204 in the entire or partial area of the predetermined region, the three-dimensional shaping apparatus 1200 scans and irradiates the entire or partial area of the predetermined region by causing the deflector 1203 to deflect the electron beam 1207 (melting step). During this step, the three-dimensional shaping apparatus 1200 dynamically corrects the field curvature caused by the deflection of the electron beam 1207. In step S1209, the three-dimensional shaping apparatus 1200 judges whether or not the scanning and irradiation has been completed for all layers. If the judgment is that the scanning and irradiation has been completed (YES in step S1209), the three-dimensional shaping apparatus 1200 ends shaping; otherwise (NO in step S1209), the three-dimensional shaping apparatus 1200 advances to step S1211. In step S1211, the three-dimensional shaping apparatus 1200 moves the Z-axis stage 1206 by the thickness of the metal layer formed in the above steps. The three-dimensional shaping apparatus 1200 repeats step S1201 and the subsequent steps.

<Technique of Exemplary Embodiment>

Fig. 1 is a view explaining the configuration of the three-dimensional shaping apparatus 100 according to this exemplary embodiment. The three-dimensional shaping apparatus 100 basically has the same configuration as that of the three-dimensional shaping apparatus 1200 shown in Fig. 12A. That is, as shown in Fig. 1, the three-dimensional shaping apparatus 100 includes an electron gun 101, a lens 102, a main deflector 103, a focus corrector 109, and a Z-axis stage 106.

The deflection area, that is, the shaping area, of the main deflector 103 of the three-dimensional shaping apparatus 100 is a 200-mm square. The movable range of the Z-axis stage 106, that is, the maximum shaping depth, of the three-dimensional shaping apparatus 100 is 200 mm.

The configuration of the three-dimensional shaping apparatus 100 is different from that of the three-dimensional shaping apparatus 1200 in that the former, unlike the latter, includes a sub-deflector 108 as a deflector in addition to the main deflector 103. As with the main deflector 103, the sub-deflector 108 consists of a set of X-direction deflection coils and a set of Y-direction deflection coils.

The sub-deflector 108, as with the main deflector 103, deflects the electron beam 107. The deflection area of the sub-deflector 108 is also square, but is much smaller than that of the main deflector 103. More specifically, the deflection area of the sub-deflector 108 is at the largest a 4-mm square. The reason why the deflection area of the sub-deflector 108 is as small as described above is that the number of turns for the coils forming the sub-deflector 108 is smaller than that for the coils forming the main deflector 103. The deflection area of the sub-deflector 108 will hereinafter be referred to as the sub-deflection field.

The sub-deflector 108 enables shaping under a condition that makes conspicuous the effect of this exemplary embodiment, that is, the effect of suppressing excessive evaporation of the metal powder 104. The condition is that the unit-area power of the electron beam 107 in the three-dimensional shaping apparatus 100 is larger than that of the electron beam 1207 in the three-dimensional shaping apparatus 1200. This corresponds to the shaping resolution, shaping speed, or both to be achieved in the three-dimensional shaping apparatus 100 being higher than the shaping resolution, shaping speed, or both achieved in the three-dimensional shaping apparatus 1200.

The three-dimensional shaping apparatus 100 is equipped with a control system that consists of a central controller 110, a bias voltage controller 111, a sub-deflection controller 112, a main deflection controller 113, a focus controller 119, a stage controller 114, and a storage unit 120. The bias voltage controller 111 is connected to the grid 101c, the sub-deflection controller 112 is connected to the sub-deflector 108, the main deflection controller 113 is connected to the main deflector 103, the focus controller 119 is connected to the focus corrector 109, and the stage controller 114 is connected to the Z-axis stage 106. The bias voltage controller 111, sub-deflection controller 112, main deflection controller 113, focus controller 119, and stage controller 114 are all connected to the central controller 110. The central controller 110 is connected to the storage unit 120. The storage unit 120 stores shape data and shaping condition data.

The operation of the three-dimensional shaping apparatus 100 will be described below. The operation of the three-dimensional shaping apparatus 100 is basically the same as that of the three-dimensional shaping apparatus 1200 shown in Fig. 12A. That is, as with the three-dimensional shaping apparatus 1200 shown in Fig. 12A, the three-dimensional shaping apparatus 100 spreads the metal powder 104 over the shaping plane 105, thereby forming a powder layer consisting of the metal powder 104. Then the three-dimensional shaping apparatus 100 causes the electron gun 101 to generate the electron beam 107, causes the lens 102 to focus the electron beam 107, and, while correcting the field curvature with the focus corrector 109, causes the main deflector 103 to deflect the electron beam 107 so that the metal powder 104 is scanned and irradiated with the electron beam 107, thereby preheating (preliminarily sintering) the metal powder 104, and then melting and solidifying the metal powder 104. The three-dimensional shaping apparatus 100 uses the Z-axis stage 106 to compensate for an increase in the height of a three-dimensional structure in process, which increase results from the melting and solidification of the metal powder 104.

However, the operation of the three-dimensional shaping apparatus 100 is different from that of the three-dimensional shaping apparatus 1200 shown in Fig. 12A in the following points. First, the three-dimensional shaping apparatus 100, in the melting step, that is, in the process step of melting the powder layer made of the metal powder 104 by raising the temperature of the powder layer from a preheating temperature of the powder layer to its target temperature, uses the sub-deflector 108 in addition to the main deflector 103 in order to scan and irradiate the metal powder 104. Second, the three-dimensional shaping apparatus 100 performs, in the melting step, multiple scanning and irradiation of regions where the metal powder 104 is melted. Third, the three-dimensional shaping apparatus 100 divides the melting step into two steps and follows them step by step. Fourth, the three-dimensional shaping apparatus 100, in the second melting step, increases the cross-sectional diameter of the electron beam 107 on the shaping plane 105.

In the two melting steps, the three-dimensional shaping apparatus 100 uses the sub-deflector 108 for not only the scanning of the regions where the metal powder 104 is melted, but also the scanning of the regions where the metal powder 104 is not melted, that is, the scanning for preventing unnecessary melting of the metal powder 104 in the regions where the metal powder 104 is not melted. In the second melting step, the three-dimensional shaping apparatus 100 uses the focus corrector 109 to increase the cross-sectional diameter of the electron beam 107. Here, the focus corrector 109 receives the sum of the correction signal for dynamic correction of the field curvature caused by deflection of the electron beam 107 and a predetermined offset signal for increasing the cross-sectional diameter of the electron beam 107.

The reason why the three-dimensional shaping apparatus 100 uses the sub-deflector 108 for the scanning and irradiation of the metal powder 104 in the melting step is to increase, in the melting step, the scanning speed of when performing the multiple scanning and irradiation of the regions where the metal powder 104 is melted and the scanning speed of when, without allowing unnecessary melting of the metal powder 104, scanning the regions where the metal powder 104 is not melted. That is, the scanning speed achieved by the sub-deflector 108 is higher than that achieved by the main deflector 103.

With the scanning speed for the regions where the metal powder 104 is melted being increased by the use of the sub-deflector 108, one can increase the degree of multiplication of the scanning and irradiation, that is, the repetition number of the scanning and irradiation. Increasing the repetition number makes more conspicuous the effect of the multiple, not single, scanning and irradiation. The effect (prevention of an excessive temperature rise of the superficial part of the powder layer consisting of the metal powder 104) will be described later. With the scanning speed for the regions where the metal powder 104 is not melted also being increased by the use of the sub-deflector 108, one can also prevent unnecessary melting of the metal powder 104 more thoroughly.

The reason why the scanning speed achieved by the sub-deflector 108 is higher than that achieved by the main deflector 103 as described above is that the response speed of the sub-deflector 108 and sub-deflection controller 112 is higher than that of the main deflector 103 and main deflection controller 113. The response speed being that high is a result of the number of turns for the coils forming the sub-deflector 108 being smaller than that for the coils forming the main deflector 103, that is, the inductance of the former being smaller than that of the latter.

The reason why the three-dimensional shaping apparatus 100 performs, in the melting step, the multiple, not single, scanning and irradiation of the regions where the metal powder 104 is melted is to decrease the unit-area heat given by a single round of irradiation to the powder layer, and to gradually diffuse the heat given to the heat generating part (superficial part) of the powder layer consisting of the metal powder 104 to a deeper part of the powder layer. This can prevent an excessive temperature rise of the superficial part of the powder layer and thereby prevent excessive evaporation of the metal powder 104. Note here that this requires increasing the speed of the scanning of the region. That is, the scanning takes advantage of the high-speed response of the sub-deflector 108 and sub-deflection controller 112.

The reason why the three-dimensional shaping apparatus 100 divides the melting step into two steps and follows them step by step is to lower the highest reached temperature, in the melting step, of the powder layer consisting of the metal powder 104, and thus prevent the excessive temperature rise and evaporation thoroughly. The mechanism by which the highest reached temperature of the powder layer consisting of the metal powder 104 is lowered in the two melting steps, especially in the second melting step, will be described later.

The two melting steps are more specifically the process step of raising the temperature of the powder layer from its preheating temperature to its melting point without melting it, and the process step of melting the powder layer and raising the temperature of the powder layer from its melting point to its target temperature. That is, the unit-area heat given to the powder layer in the former step is the unit-area heat for raising the temperature of the powder layer from the preheating temperature to the melting point, but the unit-area heat given to the powder layer in the latter step is the sum of the unit-area heat necessary to melt the powder layer, that is, the product of the melting heat [J/g] and the density [g/cm$^3$] of the powder layer, and the unit-area heat for raising the temperature of the powder layer from its melting point to its target temperature. The former and latter steps will hereinafter be referred to as the first and second melting steps, respectively.

The reason why the three-dimensional shaping apparatus 100, in the second melting step, increases the cross-sectional diameter of the electron beam 107 on the shaping plane 105 with the focus corrector 109 is to reduce the unit-area heat given to the powder layer consisting of the metal powder 104, and thus lower the highest reached temperature of the powder layer in the second melting step. The influence of the increase in the cross-sectional diameter on the shaping resolution of the three-dimensional shaping apparatus 100 will be described later.

The operations of the central controller 110, bias voltage controller 111, main deflection controller 113, sub-deflection controller 112, focus controller 119, and stage controller 114 in the preheating step and the two melting steps are as follows. The data stored in the storage unit 120 is input to the central controller 110. Based on the data, the central controller 110 controls the bias voltage controller 111, main deflection controller 113, sub-deflection controller 112, and focus controller 119. More specifically, the central controller 110 increases or decreases the current of the electron beam 107 by changing the bias voltage via the bias voltage controller 111, operates the main deflector 103 via the main deflection controller 113, and operates the sub-deflector 108 via the sub-deflection controller 112, and moves the focus corrector 109 via the focus controller 119. Upon completion of the preheating step and the two melting steps, the central controller 110 moves the Z-axis stage 106 by a necessary moving step via the stage controller 114.

The storage unit 120 stores shaping conditions which include the acceleration voltage and current of the electron beam 107, the density [g/cm$^3$], specific heat [J/(g·K)], heat conductivity [W/(cm·K)], and melting heat [J/g] of the metal powder 104, the room temperature [°C], the preheating temperature [°C], melting point [°C], and target temperature [°C] of the metal powder 104, and the thickness [μm] of the powder layer consisting of the metal powder 104 as well as the degree of multiplication of the scanning and irradiation, that is, the repetition number of the scanning and irradiation.

Out of the above shaping conditions, the room temperature, preheating temperature, melting point, and target temperature determine the temperature rises of the powder layer consisting of the metal powder 104 in the preheating step and the two melting steps, and the room temperature, preheating temperature, melting point, and target temperature, and the density, specific heat, and melting heat of the metal powder 104 determine the unit-volume heats [J/cm$^3$] to be given to the powder layer in the preheating and melting steps. The above temperature rises and the unit-volume heat are those of when the temperature distribution of the powder layer consisting of the metal powder 104 in the depth direction (Z direction) is leveled. Multiplying the unit-volume heats by the thickness of the powder layer consisting of the metal powder 104 gives the unit-area heats [J/cm$^2$] given to the powder layer in the preheating and melting steps. Dividing the unit-area heats by the unit-area power [W/cm$^2$] of the electron beam 107 gives the times [t] during which each point in the regions where the metal powder 104 is melted is irradiated in the preheating step and the two melting steps, and dividing the times by the repetition number of the scanning and irradiation, that is, the number of division of an irradiation time, gives the irradiation time [t] per irradiation for each point. The above unit-area power of the electron beam 107 is determined by the acceleration voltage, current, and cross-sectional diameter of the electron beam 107. Having the irradiation time per irradiation divide the distance between adjacent points in the regions gives the speed of the scanning of the regions with the electron beam 107. These calculations are performed by the central controller 110.

Note that the two melting steps being different in respect of the cross-sectional diameter of the electron beam 107 means the two melting steps being different also in respect of the unit-area power of the electron beam 107. Also note that the two melting steps are different in respect of the repetition number of the scanning, that is, the number of division of the irradiation time.

The two melting steps will be described in detail below. The preheating step in this exemplary embodiment, that is, the preheating step of the three-dimensional shaping apparatus 100 is the same as a conventional preheating step, that is, the preheating step of the three-dimensional shaping apparatus 1200, and thus descriptions thereof will be omitted.

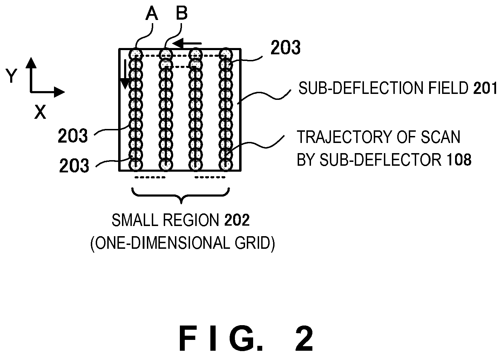

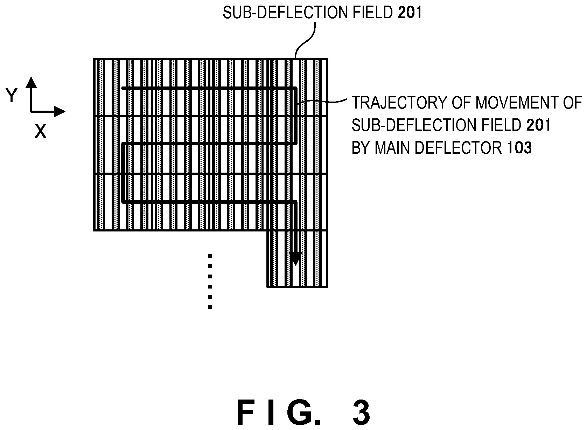

Fig. 2 is a view explaining how a small region in the sub-deflection field is scanned and irradiated with the electron beam in the first melting step. Fig. 3 is a view explaining how small regions to be scanned and irradiated by the three-dimensional shaping apparatus according to this exemplary embodiment are arranged on the shaping plane. The small region shown in Fig. 2 is identical to each of the small regions shown in Fig. 3.

The above scanning and irradiation is a series of steps of dividing the region where the metal powder 104 is melted into small regions 202, each of which can be included in the deflection field of the sub-deflector 108, that is, a sub-deflection field 201; causing the sub-deflector 108 to give multiple scanning to small regions 202 one at a time; and causing the main deflector 103 to move the sub-deflection field 201 upon every completion of the scanning of a single small region 202. Repeating the above series of steps results in the small regions 202 that have been given the multiple scanning and irradiation by the sub-deflector 108 being arranged successively on the shaping plane 105 and filling the region where the metal powder 104 is melted. Here, the completion of the scanning of a single small region 202 refers to the multiple scanning and irradiation of the small region 202 resulting in the metal powder 104 at each and every point in the small region 202 having been given the total amount of unit-area heat that should be given to it in the first melting step.

Added to the above explanations is that if the region where the metal powder 104 is melted is small, and can thus be included in the sub-deflection field 201, the region need not be divided into smaller regions. In that case, the region is processed as a single small region 202.

As shown in Figs. 2 and 3, the small regions 202 in this exemplary embodiment, which are each included in the sub-deflection field 201, each form a one-dimensional grid. The one-dimensional grid is a division of a one-dimensional grid larger than the sub-deflection field 201, which grid is divided into grids each having a size equal to that of the sub-deflection field 201. Note that when a plurality of the one-dimensional grids are laminated, their directions are rotated by 90° one layer after another. This connects X-direction one-dimensional grids and Y-direction one-dimensional grids in the Z direction, thereby forming a single continuous self-standing structure.

In Fig. 2, the trajectories indicated by solid and dotted lines are those of the scanning by the sub-deflector 108 in the region where the metal powder 104 is melted (small region 202) and the region where the metal powder 104 is not melted, respectively. Each circle 203 on the trajectory indicated by the solid lines is a circle centered at each point irradiated with the electron beam 107, and represents the cross section of the electron beam 107. That is, each circle 203 is the smallest component of the small region 202.

The start and the end point of the scanning (one separate scanning) of the small region 202 are points A and B in Fig. 2, respectively. The scanning starts at point A. When the scanning reaches point B, the same scanning starts again from point A unless the repetition number of the scanning reaches a predetermined number.

Throughout the scanning and irradiation, the electron beam 107 irradiates somewhere in the small region 202, but none of the points in it is irradiated continuously with the electron beam 107. More specifically, any arbitrary point is given a very short time of irradiation periodically. That is, the nth irradiation of any arbitrary point starts after a predetermined waiting time after the (n-1)th irradiation of that point is completed, where n is a natural number which can take all integer values equal to or larger than 2.

The above waiting time is equal to the time from when the scanning starts at point A, the scanning later reaching point B, to when the scanning returns to point A. That is, the above waiting time is equal to the time it takes for the points other than point A in the small region 202 to be irradiated successively.

Setting the waiting time to be equal to or longer than a predetermined time determined from the thickness and thermal diffusion coefficient of the powder layer consisting of the metal powder 104 enables one to reduce the unit-area given by a single round of irradiation to the powder layer consisting of the metal powder 104, and diffuse the heat given to the heat generating part (superficial part) of the powder layer to a deeper part of the powder layer gradually. As a result, one can prevent an excessive temperature rise of the superficial part of the metal powder 104, and can thus prevent excessive evaporation of the metal powder 104.

The electron beam 107 irradiating somewhere in the small region 202 throughout the scanning and irradiation results in shaping by the three-dimensional shaping apparatus 100 progressing regardless of the presence or absence of the waiting time. That is, performing the multiple, not single, scanning and irradiation does not decrease the shaping speed.

Let $t_w$ be the waiting time and $t_d$ be the predetermined time, respectively. Then the relationship between $t_w$ and $t_d$ is defined as:

$$t_w \geq t_d \qquad\qquad ...(1)$$

The predetermined time $t_d$ is given by:

$$t_d = L^2/(\pi^2 \alpha) \qquad\qquad ...(2)$$

where L represents the thickness of the powder layer consisting of the metal powder 104, and $\alpha$ represents the thermal diffusion coefficient. The thermal diffusion coefficient $\alpha$ is given by:

$$\alpha = \lambda/(\rho c) \qquad\qquad ...(3)$$

where $\lambda$ represents the heat conductivity, $\rho$ represents the density, and c represents the specific heat.

Suppose that the material of the metal powder 104 is titanium (Ti), for example. Substituting the relevant physical properties of Ti into equation (3) determines the thermal diffusion coefficient $\alpha$ of Ti to be 0.073 cm$^2$/s. Here, the heat conductivity $\lambda$, density $\rho$, and specific heat c of Ti are set to 0.17 W/(cm·K), 4.5 g/cm$^3$, and 0.52 J/(g·K), respectively. Setting the thickness L of the powder layer consisting of the metal powder 104 to 50 $\mu$m and substituting this value and the thermal diffusion coefficient $\alpha$ into equation (2) determines the predetermined time $t_d$ to be 35 $\mu$s.

In the first melting step, as shown in Fig. 2, the small region 202 is scanned and irradiated under the condition that the cross-sectional diameter of the electron beam 107 is small. Assuming here that the acceleration voltage, current, and cross-sectional diameter of the electron beam 107 are respectively 50 kV, 10 mA, and 0.2 mm determines the unit-area power of the beam and the irradiation time (irradiation time not divided for multiple scanning) at each point in the small region 202 are 1.6 MW/cm$^2$ and 6.4 $\mu$s, respectively. Here, the preheating temperature and melting point of the powder layer made consisting of the metal powder 104 are 800°C and 1,668°C, respectively.

Let $t_e$ be the above irradiation time. From the irradiation time $t_e$ and the predetermined time $t_d$ being respectively 6.4 $\mu$s and 35 $\mu$s as described above, it follows that in the first melting step, $t_e > t_d$ holds. Under this condition, the cross-sectional diameter of the electron beam 107 being small results in the shaping resolution being high, but the unit-area power of the beam being large results in the temperature rise of the heat generating part of the powder layer consisting of the metal powder 104 tending to be large. Performing multiple, not single, scanning and irradiation of the small region 202 as described above is a solution to this problem.

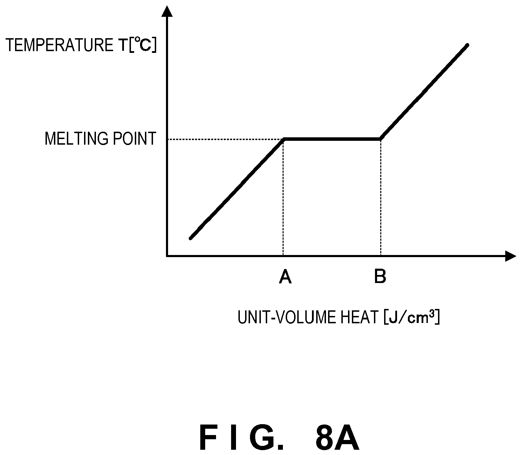

Heat given to the powder layer in the first melting step is, as described above, the unit-area heat for raising the temperature of the powder layer from its preheating temperature to its melting point, and is not enough (the heat not including melting heat) to melt the powder layer. Accordingly, the excessive temperature rise of the superficial part of the metal powder 104 does not occur easily. More specifically, the temperature of the powder layer in the small region 202 at any depth position is equal to or lower than the melting point of the powder layer, reaches the peak at the melting point, or is slightly higher than the melting point. This is because of the metal powder 104 having a nonlinear characteristic to temperature (Fig. 8A). This will be described later.

Added to the above explanations is that if the irradiation time $t_e$ is chosen as the irradiation time at each point in the small region 202 as is, the slow response of the main deflector 103 and main deflection controller 113 can lead to a shortage of the unit-area heat given to the small region 202. This applies to not only the first melting step but also the second melting step.

The above shortage of the heat results from starting the scanning with the sub-deflector 108 before the movement of the sub-deflection field 201 by the main deflector 103 has been stabilized sufficiently, which results in small regions other than the small region 202 being, whether entirely or partially, scanned and irradiated, and thus the time for the small region 202 to be scanned and irradiated being decreased. The above shortage of heat can results also from the slow response of the sub-deflector 108 and sub-deflection controller 112.

The temperature of the powder layer, after the first melting step has been completed, becomes equal to the melting point at any depth position by the time the second melting step is started. This is because the thermal diffusion in the powder layer in its depth direction (Z direction) results in the temperature distribution in the powder layer in the same direction being leveled. However, at this stage of the melting process, the powder layer is not melted at any depth position. A melting part, if any, of the powder layer implies that it has a temperature of over its melting point.

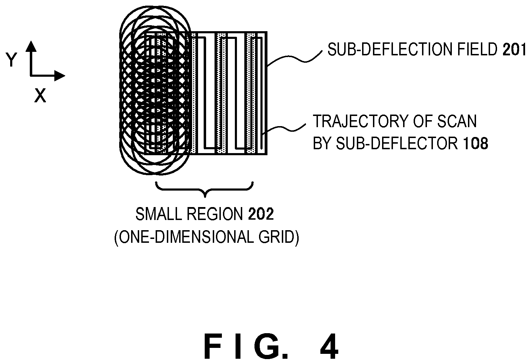

Fig. 4 is a view explaining how the small region in the sub-deflection field is scanned and irradiated with the electron beam in the second melting step. In the second melting step, as shown in Fig. 4, the entire region of the sub-deflection field 201, which region includes the small region 202, is given multiple scanning and irradiation under the condition that the cross-sectional diameter of the electron beam 107 is large. Note that Fig. 4, for the sake of clarity, shows scanning and irradiation of only a limited part of the points (the number of circles each representing the cross-sectional diameter of the electron beam 107 is small).

The above scanning and irradiation comprises causing the sub-deflector 108 to perform multiple (or single) scanning of all points in the sub-deflection field 201 one by one, and, upon every completion of the scanning of all the points, causing the main deflector 103 to move the sub-deflection field 201. Here, the completion of the scanning of all the points refers to the multiple scanning and irradiation of all the points resulting in metal powder 104 at each of them having been given the total amount of unit-area heat that should be given to it in the second melting step.

Assuming that in the above scanning and irradiation, the acceleration voltage, current, and cross-sectional diameter of the electron beam 107 are respectively 50 kV, 10 mA, and 2.6 mm determines the unit-area power and the irradiation time $t_e$ (irradiation time not divide for multiple scanning) at each point in the small region 202 to be 9.4 MW/cm2 and 0.84 $\mu$s, respectively. Here, the melting point and target temperature of the powder layer consisting of the metal powder 104 are 1,668°C and 1,768°C, respectively. The target temperature is the sum of the melting point of 1,668°C and a temperature margin of 100°C. This margin will be described later.

That is, the second melting step satisfies

$$t_e > t_d \qquad \qquad ...(4)$$

Under this condition, the unit-area power of the beam is small, and thus the temperature rise of the outermost part of the powder layer is small. If the temperature rise is sufficiently small, the second melting step can be completed only by single, not multiple, scanning and irradiation of the small region 202.

When processed with the two melting steps, the regions scanned and irradiated only in only the second melting step do not melt, but the regions scanned and irradiated both in the first and second melting steps melt. That is, following the two melting steps result in the unit-area heat given to the logical product of the region scanned and irradiated in the first melting step and the region scanned and irradiated in the second melting step being equal to or larger than the unit-area heat necessary to melt the powder layer. Then the temperature of the logical product exceeds the melting point of the powder layer.

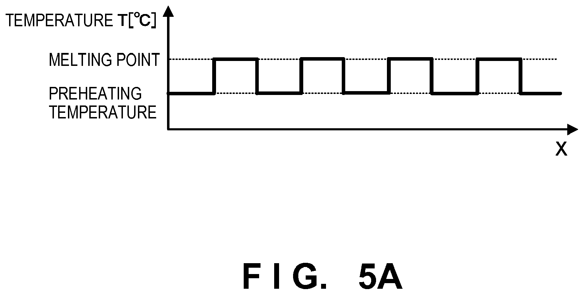

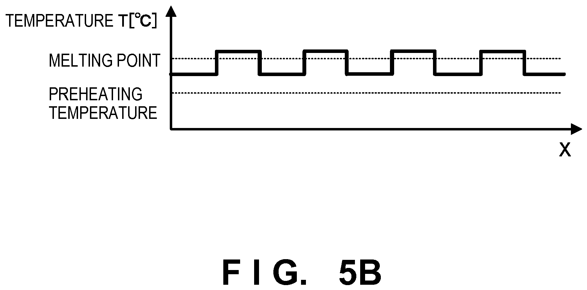

This is explained by Figs. 5A and 5B. Figs. 5A and 5B are graphs showing X-direction temperature distributions in the powder layer having been processed in the first and second melting steps, respectively. Both temperature distributions are those in the sub-deflection field, and those in a state in which the temperature distribution in the depth direction (Z direction) in the powder layer is leveled. The region, in Fig. 5A, where the temperature is equal to the melting point of the powder layer and the region, in Fig. 5B, where the temperature is over the melting point (the powder being melted) both correspond to the small region 202 and also to the above logical product.

Therefore, the shaping resolution in this exemplary embodiment is determined from the cross-sectional diameter of the electron beam 107 in the first melting step. That is, the shaping resolution is that of when the cross-sectional diameter of the beam is decreased for higher shaping resolution, higher unit-area power of the beam, or both. Meanwhile, the shaping speed in this exemplary embodiment is determined from the power of the electron beam 107 in the first and second melting steps. The highest reached temperature of the powder layer in this exemplary embodiment is the sum of the temperature rise of the outermost part of the powder layer in the second melting step, and the melting point of the powder layer. That is, the highest reachable temperature of the powder layer is that of when the cross-sectional diameter of the beam is increased for lower unit-area power of the electron beam 107. For these reasons, this exemplary embodiment allows one to, without degrading neither the shaping resolution nor the shaping speed, prevent excessive evaporation of the powder layer both easily and effectively.

The reason why the entire region of the sub-deflection field 201 is scanned and irradiated in the second melting step as described above is to uniform the heat given to the points in the small region 202. If the region to be scanned and irradiated is not the entire region of the sub-deflection field 201 but is limited to the small region 202, the following problem occurs: if the pitch of the small region 202, that is, the pitch of the one-dimensional grid is uniform, the unit-area heat given to the points in the small region 202 also is uniform, but if the pitch is non-uniform, the unit-area heat can also be non-uniform. This problem can occur when the cross-sectional diameter of the electron beam 107 is larger than the pitch of the small region 202, that is, the pitch of the one-dimensional grid, and thus the electron beam 107 can give heat to a plurality of small regions 202. Here, suppose the power and cross-sectional diameter of the electron beam 107, and the scanning speed for the small region 202 are constant.

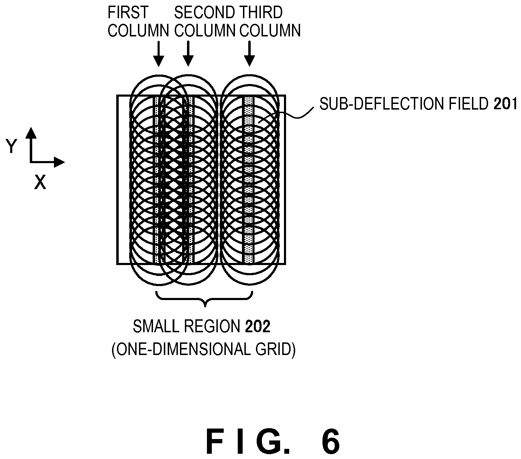

This is explained by Fig. 6. As shown in Fig. 6, if the small regions 202 on the first and second columns from the left are close to each other but the small region 202 on the third column is away from the small regions 202 on the first and second columns, the following problem occurs: while the small region 202 on the first column is scanned and irradiated, the small region 202 on the second column receives the power of the electron beam 107; while the small region 202 on the second column is scanned and irradiated, the small region 202 on the first column receives the power of the electron beam 107; but in neither period does the small region 202 on the third column receive any power of the electron beam 107.

That is, the small region 202 on the third column receives the power of the electron beam 107 only while the small region 202 itself is scanned and irradiated. This results in a shortage of heat given to the small region 202 on the third column. This problem can occur not only in the case where the small regions 202 are one-dimensional grids; the problem can occur in general cases where small regions 202, regardless of their shapes, have non-uniform or non-periodical densities.

Note that in the second melting step, even if the pitch is constant, the cross-sectional diameter of the electron beam 107 being large results in regions other than the small regions 202 (gaps in the one-dimensional grid).being given part of the power of the electron beam 107, which part corresponds to a shortage of heat given to the small region 202. The shortage can be compensated by decreasing the speed at which the small region 202 is scanned and irradiated or by increasing the number of rounds of the scanning and irradiation.

In the second melting step the small region 202 can have a shortage of heat due to another but similar reason. The reason is that, as seen from Figs. 4 and 6, the cross-sectional diameter of the electron beam 107 being increased results in regions other than the sub-deflection field 201 being irradiated with the beam, and the heat that should be given to the sub-deflection field 201 thus being given to its outside.

However, the shortage of heat is compensated while small regions located near the small region 202 are scanned and irradiated. That is, the region scanned and irradiated with the electron beam 107 being increased results in regions given sufficient heat by the electron beam 107 being increased accordingly. For this reason, the second melting step requires that the electron beam 107 scan and irradiate not only the regions where the one-dimensional grids (Fig. 3) are shaped but also their surroundings.

To investigate the time transition of the temperature of the powder layer in the first and second melting steps, the time transitions of the temperatures of the outermost and deepest parts of the powder layer in the melting steps were calculated by numerical thermal analysis. In addition, for the sake of comparison the time transitions of the temperatures of the outermost and deepest parts of the powder layer melted without dividing the melting step into two steps or increasing the cross-sectional diameter of the electron beam 107 with the focus corrector 109 were calculated. Melting the powder layer in this way corresponds to having the melting step completed only by the first melting step. The analysis will be described below.

The analyses were performed by composing, for the powder layer in which heat is generated, by a one-dimensional thermal diffusion equation written by:

$$\frac{\partial T(z,\,t)}{\partial t} \;=\; \alpha\,\frac{\partial^2 T(z,\,t)}{\partial z^2} \;+\; \frac{1}{\rho c}\,Q(z,\,t) \qquad\qquad ...(5)$$

and solving it with a finite difference method. In equation (5), T(z, t) represents the temperature [°C] of the powder layer at an arbitrary point in the small region 202, and Q(z, t) represents the unit-volume heat [W/cm$^3$] generated at an arbitrary point in the small region 202. Note that Q(z, t) takes a nonzero value while the point is irradiated with the electron beam 107, but is zero otherwise. These functions both assume the time t to be zero at the time point where the first round of the total of N times of irradiation with the electron beam 107 at the point starts. Here, N is 2 or greater as long as the small region 202 is given the multiple scanning and irradiation, but is 1 otherwise.

Added to the above explanations is that equation (2) can be derived from equation (5). More specifically, equation (2) is the time constant of the first-order component of the solution to equation (5) for a period after a given irradiation with the electron beam at the arbitrary point has been completed and therefore the heat generated at the point is zero, that is, Q(z, t) = 0. The solution is given by:

$$
\begin{aligned}
T(z,\,t) &= \sum_{k=0}^{\infty} a_k \cos\!\left(\frac{k\pi}{L}\,z\right) \exp\!\left\{-\frac{k^2\pi^2\alpha}{L^2}\,(t-t_a)\right\} \\[2mm]
&= a_0 + a_1 \cos\!\left(\frac{\pi}{L}\,z\right) \exp\!\left\{-\frac{\pi^2\alpha}{L^2}\,(t-t_a)\right\} + \sum_{k=2}^{\infty} a_k \cos\!\left(\frac{k\pi}{L}\,z\right) \exp\!\left\{-\frac{k^2\pi^2\alpha}{L^2}\,(t-t_a)\right\} \\[2mm]
&= a_0 + a_1 \cos\!\left(\frac{\pi}{L}\,z\right) \exp\!\left\{-(t-t_a)/\tau_1\right\} + \sum_{k=2}^{\infty} a_k \cos\!\left(\frac{k\pi}{L}\,z\right) \exp\!\left\{-(t-t_a)/\tau_k\right\}
\end{aligned}
$$

$$...(6)$$

The first-order component is the second term on the right-hand side of equation (6). That is, the time constant $\tau_1$ (= $L^2/(\pi^2\alpha)$) of the second term is equal to $t_d$ given by equation (2).

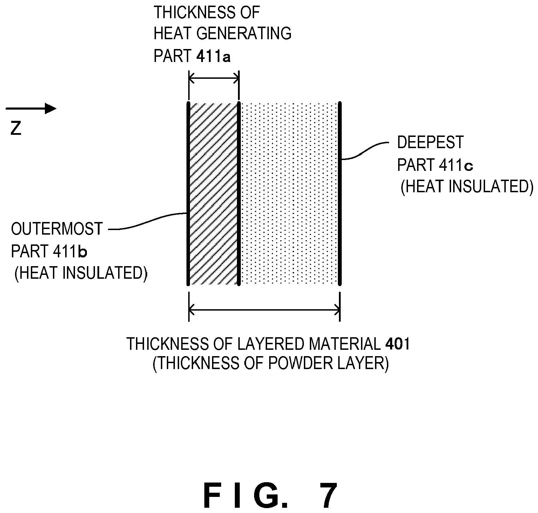

Fig. 7 shows a calculation model for the analyses. The model assumes the following conditions. First, the powder layer consisting of the metal powder 104 is a continuous layered material 401 regardless of the gaps between the particles of the metal powder 104, and the density, specific heat, and heat conductivity of the layered material 401 are uniform. These values are constant regardless of melting or solidification of the layered material 401.

Second, the heat in the heat generating part 411a of the layered material 401 is also uniform. The unit-area power given to the layered material 401 by scanning the layered material 401 is determined by simply dividing the power of the electron beam 107 by its cross-sectional area. Here, assume that the power of the electron beam 107 is supplied to the heat generating part 411a without loss. Also assume that the outermost part of the heat generating part 411a coincides with the outermost part 411b, and the thickness of the heat generating part 411a is smaller than that of the layered material 401.

Third, the layered material 401 is thermally continuous in the range from the outermost part 411b to the deepest part 411c and thus heat can be diffused in the range, but the layered material 401 is thermally insulated at the outermost part 411b and deepest part 411c and thus the heat is not diffused to above the outermost part 411b or to below the deepest part 411c. From this assumption, the boundary condition of the solution of equation (5) is that the gradients of the solutions at the boundaries, that is, the temperature gradients $\partial T(0, t)/\partial z$ and $\partial T(L, t)/\partial z$, are zero.

Fourth, the temperature of the layered material 401 before irradiation with the electron beam 107 is uniform, and is equal to the preheating temperature and melting point of the metal powder 104 in the first and second melting steps, respectively. From this assumption, the initial (t = 0) condition for the solution of equation (5) is that the solution at each depth position, that is, the temperature T(z, 0), is equal to the preheating temperature or melting point of the metal powder 104.

Fifth, as long as the layered material 401 is continuously irradiated with the electron beam 107, the superficial part of the layered material 401 is continuously irradiated with the electron beam 107 regardless of the temperature rise. In reality, if the temperature of the superficial part of the powder layer consisting of the metal powder 104 rises and thus the outer side of the powder layer is evaporated, the outermost part of the powder layer shifts toward the deeper side. As a result, the powder layer is given a recess having a diameter almost equal to that of the electron beam 107.

When solving equation (5) to obtain the temperature distribution of the layered material 401 and the time transition of its temperature distribution, one needs to consider the melting and solidification of the layered material 401. This is because the temperature of the layered material 401, as well as that of other materials that are melted or solidified, presents nonlinear response with respect to the heat given to it. The nonlinearity of the response stems from the melting heat (or solidification heat) of the material.

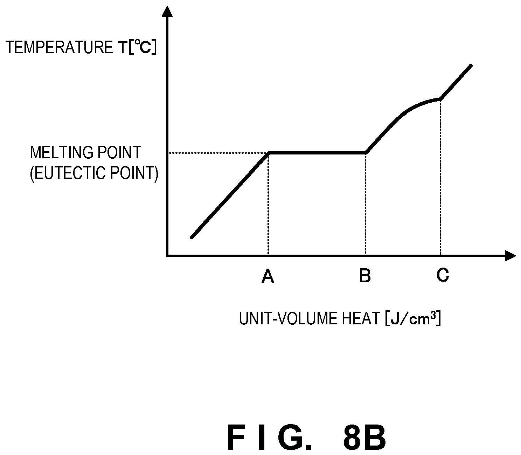

The above explanation is illustrated by Fig. 8A (and Fig. 8B). Fig. 8A is a graph showing the relationship between the temperature T [°C] at an arbitrary depth position of the layered material 401 and the unit-volume heat [J/cm$^3$] at the position. In Fig. 8A, points A and B respectively represent the start and the end point of melting of the layered material 401 at the position. As is apparent from Fig. 8A, from point A to B the temperature T remains at the melting point regardless of the unit-volume heat. The width of the region is equal to the unit-area heat necessary to melt the layered material 401, that is, the product of the melting heat [J/g] and the density [g/cm$^3$] of the layered material 401.

The characteristic that the temperature T remains at the melting point in the above region can be seen not only in pure metals (Ti in this exemplary embodiment) but also in an alloys. A relationship similar to the above but with the layered material 401 being an alloy is shown in Fig. 8B. The relationship, as opposed to that of when the layered material 401 is a pure metal, forms a curve in a region (from point B to C) on the right-hand side of point B, as shown in Fig. 8B. This is a result of the layered material 401, as an alloy, allowing a solid and a liquid phase to coexist in the region.

The consideration of the melting and solidification, specifically, refers to providing the routine of solving equation (5) with a series of processes of evaluating the unit-volume heat of the layered material 401, and modifying the temperature T(z, t) in accordance with the evaluation result. More specifically, the series of processes first determines the unit-volume heat accumulated in a microvolume at each depth position z at time t and, second, sets T(z, t) to that determined from equation (5) if the unit-volume heat is not in the range from point A to B, but resets T(z, t) to the melting point of the layered material 401 if the unit-volume heat in the range from point A to B.

The above analyses assume physical quantities of the electron beam 107 and the metal powder 104 to be as follows. That is, the right-hand side of equation (5) was determined from the following physical quantities.

The acceleration voltage and current of the electron beam 107 are 50 kV and 10 mA, respectively. The cross-sectional diameter of the electron beam 107 on the shaping plane 105 is 0.2 and 2.6 mm in the first and the second melting step, respectively. From these values, the power of the electron beam 107 is 0.50 kW. Thus, the unit-area power of the electron beam 107 is 1.6 and 9.4 MW/cm$^2$ in the first and the second melting step, respectively. Out of these values, the former is equal to that of the unit-area power of the electron beam 107 of when the melting step is not divided into two, that is, when the powder layer is melted with the cross-sectional diameter of the electron beam 107 not increased with the focus corrector 109, and the cross-sectional diameter kept at 0.2 mm.

The thickness of the layered material 401 is 50 $\mu$m, and the thickness of the heat generating part 411a (superficial part) of the layered material 401 is 10 $\mu$m. From the thickness of the heat generating part 411a and the unit-area power, the unit-volume heat Q in the heat generating part 411a of the layered material 401 is 1.6 GW/cm$^3$.

The material of the layered material 401 is titanium (Ti), and the heat conductivity $\lambda$, density $\rho$, and specific heat c of Ti are 0.17 W/(cm·K), 4.5 g/cm$^3$, and 0.52 J/(g·K), respectively. From these values, the thermal diffusion coefficient $\alpha$ of Ti is 0.073 cm$^2$/s, and from this coefficient and the above thickness of the layered material 401, the predetermined $t_d$ is 35 $\mu$s. The melting point and melting heat of Ti are 1,668°C and 0.30 kJ/g, respectively.

Added to the above explanations is that there actually are gaps between particles of the metal powder 104, and thus the density $\rho$ of the powder layer consisting of the metal powder 104 decreases accordingly. In addition, the unit-area power given to the powder layer decreases by the energy of the electrons reflected by the powder layer, and thus the unit-volume heat Q decreases accordingly. The unit-volume heat Q can further decrease because of the gap between particles of the metal powder 104. This is because the gaps increase the amount of electrons which pass per unit area through the powder layer, and because the unit-area power given to the powder layer decreases accordingly.

The preheating temperature and target temperature of the layered material 401 are 800°C and 1,768°C, respectively. That is, the temperature of the layered material 401 is raised from the preheating temperature of 800°C to the melting point of 1,668°C in the first melting step, and is raised from the melting point of 1,668°C to the target temperature of 1,768°C in the second melting step.

The target temperature is the sum of the melting point of Ti, 1,668°C, and a temperature margin of 100°C. By incorporating such a margin into the target temperature (or irradiation time), one can cancel the above-mentioned heat shortage, that is, the heat shortage due to the decrease in the irradiation time, which decrease is caused by the slow response of the main deflector 103 and main deflection controller 113. The above margin is effective also in cancelling heat shortages due to such errors as errors in the thickness of the powder layer consisting of the metal powder 104, errors in the measurement s of the beam current, errors in the measurements of the beam cross-sectional diameter, and, in addition, a heat shortage caused by the heat dissipation, which is due to the evaporation of the superficial part of the powder layer.

From the above preheating temperature, target temperature, thickness, and physical properties, the unit-area heat necessary to raise the temperature of the layered material 401 from the preheating temperature to the target temperature, the unit-area heat necessary for the layered material 401 to melt by receiving its melting heat, and the sum of these are 11, 6.8, and 18 J/cm$^2$, respectively. The unit-area heat given to the layered material 401 in the first and the second melting step is 10 and 7.9 J/cm$^2$, respectively. From these values, the irradiation time $t_e$ at each point in the small region 202 in the first and the second melting step is 6.4 $\mu$s and 0.84 ms, respectively. Each of these values are equal to each of the above-described values of the irradiation times $t_e$.

The number of division N of the irradiation time in the first and the second melting step is 6 and 1, respectively. That is, in the second melting step, the points in the sub-deflection field 201 are given single, not multiple, scanning and irradiation. From these values of the number of division N, the irradiation time per irradiation $t_e$/N in the first and the second melting step is 1.1 $\mu$s and 0.84 ms, respectively.

The waiting time $t_w$, that is, the time from when the scanning shown in Fig. 2 starts at point A, the scanning later reaching point B, to when the scanning returns to point A is 105 $\mu$s. This is three times the predetermined time $t_d$ (= 35 $\mu$s), and thus satisfies inequality (1). Therefore, the heat in the layered material 401 is diffused thoroughly, which allows one to suppress the excessive temperature rise of the superficial part of the metal powder 104.

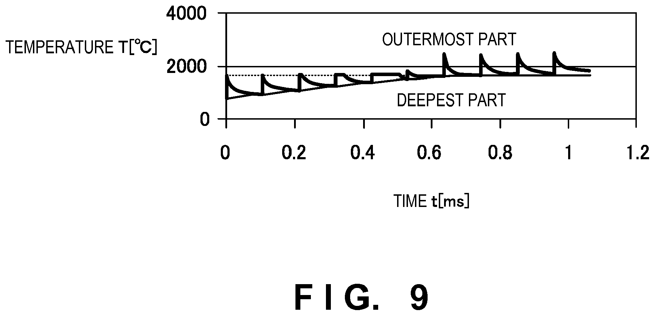

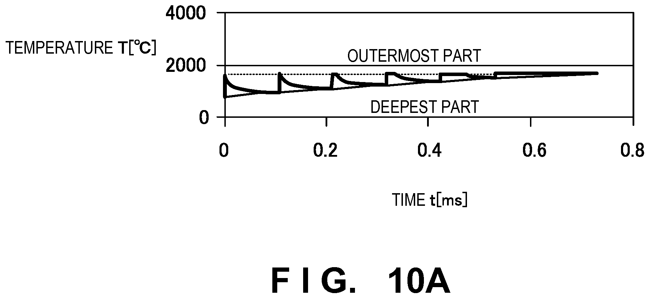

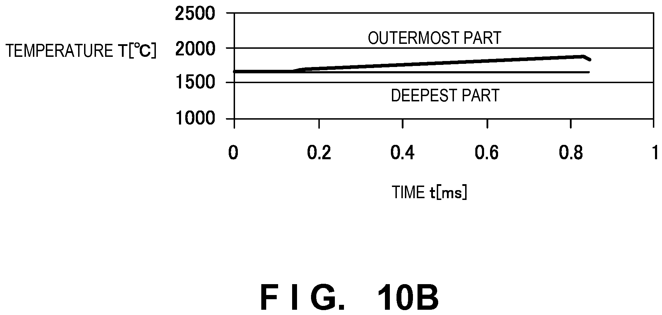

Figs. 9, 10A, and 10B show the result of the analyses. For the sake of convenience, described first are the time transitions of the temperatures of the outermost and deepest parts of the layered material 401 melted without dividing the melting step into two or increasing the cross-sectional diameter of the electron beam 107 with the focus corrector 109 (Fig. 9), followed by the time transitions of the temperatures of the outermost and deepest parts of the layered material 401 melted with the melting step divided into two, that is , the first and the second melting step (Figs. 10A and 10B).

Fig. 9 shows the time transitions of the temperatures of the outermost and deepest parts of the layered material 401 melted by not dividing the melting step into two steps or increasing the cross-sectional diameter of the electron beam with the focus corrector 109 , but keeping the cross-sectional diameter at 0.2 mm. The broken line in Fig. 9 locates 1,668°C, that is, the melting point of the layered material 401. The same broken line is used also in Figs. 10A and 10B.

The above time transitions were calculated over the period from when the irradiation of the layered material 401 starts to when the deepest part 411c is melted. For these calculations, the irradiation time $t_e$ at each point in the small region 202 was determined from the above-described physical quantities to be 11 $\mu$s. The number of division N of the irradiation time was set to 10. From these values, the irradiation time per irradiation $t_e$/N was determined to be 1.1 $\mu$s.

From Fig. 9, the highest reached temperature of the layered material 401 melted with the melting step not divided into two, the cross-sectional diameter of the electron beam 107 not increased with the focus corrector 109, and the cross-sectional diameter kept at 0.2 mm is about 2,500°C.

As can be seen from Fig. 9, the highest reached temperature is almost equal to the sum of the melting point of the material and the maximum temperature rise per irradiation. This is because the temperature of the outermost part 411b immediately before the start of the irradiation that raises the temperature to the highest reached temperature, that is, the Nth round of irradiation, is at a point near the melting point of the layered material 401. Note that the maximum temperature rise per irradiation refers to a temperature rise width in the region on the right side of point B in Fig. 8A, that is, the temperature rise which is not influenced by the nonlinearity of the temperature T.

The reasons why the temperature of the outermost part 411b immediately before the start of the Nth round of irradiation is at or near the melting point of the layered material 401 are as follows. First, as long as the waiting time $t_w$ satisfies inequality (1), the heat in the layered material 401 is sufficiently diffused in the depth direction (Z direction) during the waiting time $t_w$, and thus the temperature distribution of the layered material 401 is thus leveled. Second, the target temperature (1,768°C) of the layered material 401 is higher than the melting point (1,668°C) of the layered material 401, but the excess is as small as the above margin (100°C), and thus, when the temperature distribution becomes leveled, the temperature of the outermost part 411b cannot be significantly higher the melting point of the material.

Note that in reality, even if the excess of the target temperature is large to some extent, the temperature of the outermost part 411b immediately before the start of the Nth round of irradiation cannot exceed the melting point of the layered material 401 significantly. This is because if the unit-area heat given to the layered material 401 becomes sufficient and the deepest part 411c is melted, that is, if the temperature of the deepest part 411c exceeds the melting point of the layered material 401, the deepest part 411c becomes thermally coupled to the powder layer or metal layer beneath it, and is thus cooled, and therefore the temperature rise of the outermost part 411b is suppressed.

Fig. 10A shows the time transitions of the temperatures of the outermost part 411b and deepest part 411c of the layered material 401 melted in the first melting step, that is, the first of the two melting steps. The calculations for these were performed over the period from when the irradiation of the layered material 401 starts to when 200 μs (>>$t_d$) has elapsed after the completion of the irradiation.

As is apparent from Fig. 10A, the temperatures of the outermost part 411b and deepest part 411c in the first melting step do not exceed the melting point (1,668°C) of the layered material 401 significantly, and converge to the melting point with time. The temperatures not exceeding the melting point of the layered material 401 significantly corresponds to the heat given to the layered material 401 in the first melting step not including the melting heat as described above, and the unit-volume heat in the layered material 401 thus not exceeding point B in Fig. 8A.

Fig. 10B shows the time transitions of the temperatures of the outermost part 411b and deepest part 411c in the second melting step, that is, the second of the two melting steps. The calculations for these were performed over the period from when the irradiation of the layered material 401 starts to when the deepest part 411c is melted.

As is apparent from Fig. 10B, the highest reached temperature of the outermost part 411b in the second melting step, that is, the highest reached temperature of the layered material 401 is sufficiently lower than 2,000°C and, more specifically, is about 1,880°C. This is much lower than the highest reached temperature of about 2,500°C (Fig. 9), that is, the highest reached temperature of the layered material 401 melted with the melting step not divided into two, the cross-sectional diameter of the electron beam 107 not increased with the focus corrector 109, and the cross-sectional diameter kept at 0.2 mm. The reason why the highest reached temperature of the layered material 401 in the second melting step is that low is that the cross-sectional diameter of the electron beam 107 being increased in the second melting step results, as described above, in inequality (4) being satisfied.

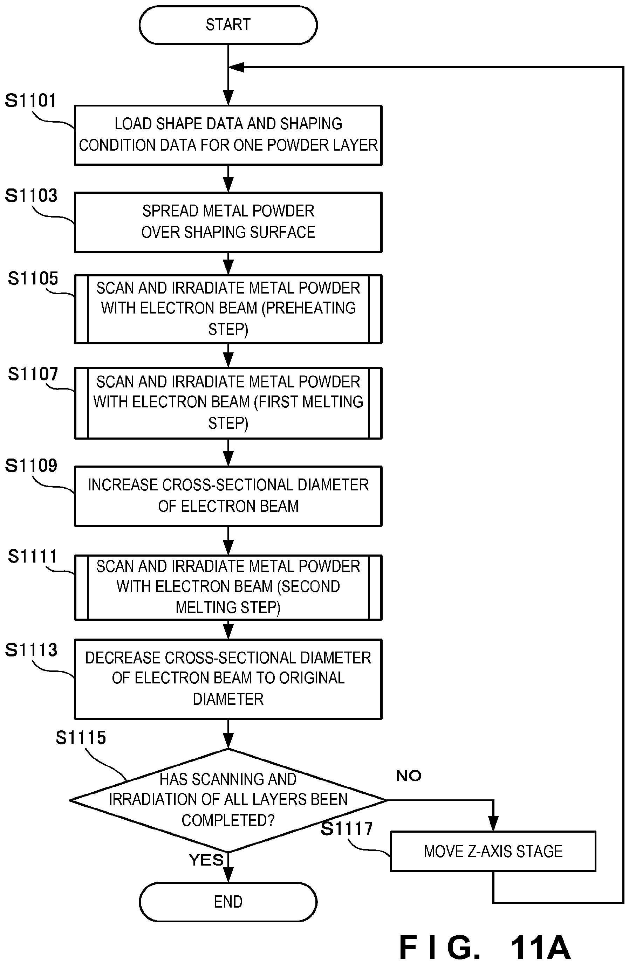

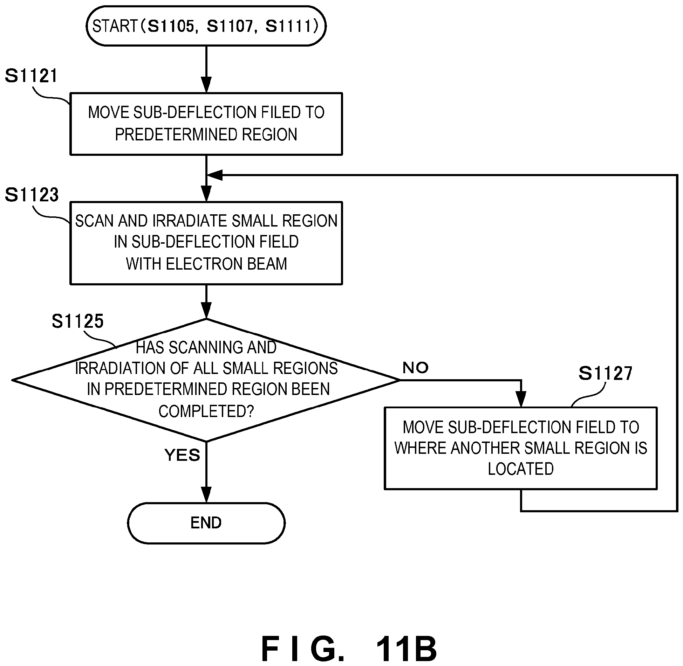

Finally, the procedure of shaping the three-dimensional structure by the three-dimensional shaping apparatus 100 will be described with reference to Figs. 11A and 11B. Fig. 11A is a flowchart explaining the procedure of shaping the three-dimensional structure by the three-dimensional shaping apparatus according to this example exemplary embodiment.

In step S1101, the three-dimensional shaping apparatus 100 loads the shape data and shaping condition data for a single powder layer. In step S1103, the three-dimensional shaping apparatus 100 spreads the metal powder 104 over the shaping plane 105, thereby forming a powder layer consisting of the metal powder 104. In step S1105, to preheat the metal powder 104 in a predetermined region (or the entire region) on the shaping plane 105, the three-dimensional shaping apparatus 100 scans and irradiates the region by causing the main deflector 103 to deflect the electron beam 107 (preheating step). During this step, the three-dimensional shaping apparatus 100 dynamically corrects the field curvature caused by the deflection of the electron beam 107. In step S1107, to raise the temperature of the metal powder 104 in the entire or partial part of the predetermined region to the melting point of the metal powder 104, the three-dimensional shaping apparatus 100 scans and irradiates the entire or partial part of the predetermined region with the electron beam 107 (first melting step). During this step, the three-dimensional shaping apparatus 100 dynamically corrects the field curvature caused by the deflection of the electron beam 107. In step S1109, the three-dimensional shaping apparatus 100 increases the cross-sectional diameter of the electron beam 107 with the focus corrector 109. In step S1111, to raise the temperature of the metal powder 104 in the entire or partial part of the predetermined region to the target temperature of the metal powder 104, the three-dimensional shaping apparatus 100 scans and irradiates the entire part of the predetermined region with the electron beam 107 (second melting step). During this step, the three-dimensional shaping apparatus 100 dynamically corrects the field curvature caused by the deflection of the electron beam 107. In step S1113, the three-dimensional shaping apparatus 100 sets the cross-sectional diameter of the electron beam 107 back to the original size with the focus corrector 109. In step S1115, the three-dimensional shaping apparatus 100 judges whether or not the scanning and irradiation has been completed for all layers. If the judgment is that the scanning and irradiation has been completed (YES in step S1115), the three-dimensional shaping apparatus 100 ends shaping; otherwise (NO in step S1115), the three-dimensional shaping apparatus 100 advances to step S1117. In step S1117, the three-dimensional shaping apparatus 100 moves the Z-axis stage 106 by the thickness of the metal layer formed in the above steps. The three-dimensional shaping apparatus 100 repeats step S1101 and the subsequent steps.

Fig. 11B is a flowchart explaining the procedure of executing the scanning and irradiation (steps S1105, S1107, an S1111) with the electron beam in the procedure of shaping a three-dimensional structure by the three-dimensional shaping apparatus according to this exemplary embodiment. In step S1121, the three-dimensional shaping apparatus 100 moves the sub-deflection field 201 to a predetermined region on the shaping plane 105 by causing the main deflector 103 to deflect the electron beam 107. In step S1123, to melt the metal powder 104 in the small region 202 included in the sub-deflection field 201, the three-dimensional shaping apparatus 100 scans and irradiates the small region 202 by causing the sub-deflector 108 to deflect the electron beam 107. In step S1125, the three-dimensional shaping apparatus 100 judges whether or not the scanning and irradiation has been completed for all the small regions 202 in the predetermined region. If the judgment is that the scanning and irradiation has been completed (YES in step S1125), the three-dimensional shaping apparatus 100 ends the scanning and irradiation in the predetermined region; otherwise (NO in step S1125), the three-dimensional shaping apparatus 100 advances to step S1127. In step S1127, the three-dimensional shaping apparatus 100 moves the sub-deflection field 201 to a region which is included in the predetermined region and which includes another small region 202, by causing the main deflector 103 to deflect the electron beam 107. The three-dimensional shaping apparatus 100 repeats step S1123 and the subsequent steps.

In summary, this exemplary embodiment allows lowering of the highest reached temperature of the powder layer consisting of the metal powder 104, that is, prevention of excessive evaporation of the powder layer, both easily and effectively without degrading the shaping resolution or shaping speed.

[Second Exemplary Embodiment]

This exemplary embodiment features basically the same configuration and operation as those in the first exemplary embodiment. In this exemplary embodiment, however, either the lens 1102 or the focus corrector 1109 is omitted, with the focus corrector 1109 or the lens 1102 provided with the function of the lens 1102 or the focus corrector 1109, respectively.

Note here that as long as the original lens 1102 has a lens effect stronger than that of the original focus corrector 1109, the coil of the lens 1102 doubling as the focus corrector 1109 and the focus corrector 1109 doubling as the lens 1102 each are likely to have an inductance larger than that of the coil of the original focus corrector 1109. That is, the lens 1102 doubling as the focus corrector 1109 and the focus corrector 1109 doubling as the lens 1102 each tend to have a response speed lower than that of the original focus corrector 1109.

[Third Exemplary Embodiment]

This exemplary embodiment features basically the same configuration and operation as those in the first and second exemplary embodiments. This exemplary embodiment, however, is provided, in addition to the main deflector 103 and the main deflection controller 113, with another main deflector and another main deflection controller (neither of which is shown) . The additional main deflector moves the sub-deflection field 201, as with the main deflector 103.

The additional main deflector has a deflection area smaller than that of the main deflector 103 but the additional main deflector and main deflection controller have a response speed higher than that of the main deflector 103 and main deflection controller 113. This allows one to prevent the decrease in the irradiation time, which is decreased by the response speed of the main deflector 103 and main deflection controller 113 being slow, and thereby prevent the resulting shortage of heat.

[Fourth Exemplary Embodiment]

This exemplary embodiment features basically the same configuration and operation as those in the first to third exemplary embodiments. In this exemplary embodiment, however, the regions to be scanned and irradiated in the sub-deflection field 201 in the second melting step are limited to small regions 202, and are not the entire part of the sub-deflection field 201.

If, however, the density of the small region 202 is non-uniform or non-periodical, the regions to be scanned and irradiated being limited to small regions 202 results in the unit-area heat given to each point in the small regions 202 being non-uniform, which gives rise to excess or shortage of heat. However, the excess or shortage can be compensated by increasing or decreasing the scanning speed per point as needed.

[Fifth Exemplary Embodiment]

This exemplary embodiment features basically the same configuration and operation as those in the first to fourth exemplary embodiments. In this exemplary embodiment, however, the power of the electron beam 107 is different between the first and the second melting step. More specifically, the power of the electron beam 107 in the second melting step is set larger than that in the first melting step. In this exemplary embodiment, for this purpose, the current of the electron beam 107 is increased or the acceleration voltage of the beam is increased.

As described above, the power of the electron beam 107being given to regions other than the small regions 202 (gaps in the one-dimensional grid in the first and second exemplary embodiments) in the second melting step results in a shortage of the power of the electron beam 107 given to the small region 202. The shortage can be compensated, as in the first exemplary embodiment, by decreasing the speed of the scanning and irradiation of the small region 202 or by increasing the number of rounds of scanning and irradiation; this, however, decreases the shaping speed.

In this exemplary embodiment, by contrast, the shortage of the power is compensated by increasing the power of the electron beam 107, without having to decrease the speed of the scanning and irradiation. Therefore, the shaping speed improves accordingly.

[Sixth Exemplary Embodiment]

This exemplary embodiment features basically the same configuration and operation as those in the first to fifth exemplary embodiments. In this exemplary embodiment, however, the multiple scanning and irradiation of the metal powder 104 is performed also in the second melting step.

The multiple scanning and irradiation in the second melting process ensures that the heat in the powder layer consisting of the metal powder 104 is diffused thoroughly. This results in thorough suppression of excessive temperature rises of the superficial part of the metal powder.

If, however, the cross-sectional diameter of the electron beam 107 is large and thus $t_e \gg t_d$ is satisfied, the above suppression shows only a limited effect. This is because the condition of $t_e \gg t_d$ allows one to suppress the temperature rise of the outermost part of the powder layer sufficiently only by single, not multiple, scanning and irradiation of the metal powder 104.

[Seventh Exemplary Embodiment]

This exemplary embodiment features basically the same configuration and operation as those in the first to sixth exemplary embodiments. However, this exemplary embodiment does not use the sub-deflector 108, but uses the main deflector 103 only.

However, this makes it difficult to increase the scanning speed for the powder layer because of the slow response of the main deflector 103 and the main deflection controller 113. The response speed being by any chance too low makes it practically impossible to increase the unit-area power of an electron beam 107 to the extent that the time taken to diffuse heat matters. That is, attempts to increase the unit-area power of the electron beam 107 result in giving excessive heat to the metal powder 104, before the time taken to diffuse the heat begins to matter, that is, before an excessive temperature rise of the superficial part of the powder layer consisting of the metal powder 104begins to matter.

In this exemplary embodiment, therefore, the excessive temperature rise of the superficial part of the powder layer consisting of the metal powder 104 can hardly be a problem. This makes it less necessary for the first melting step to perform multiple, not single, scanning irradiation of the powder layer, and also for the second melting process to increase the cross-sectional diameter of the electron beam 107.

The present invention is applicable to a system including a plurality of devices or a single apparatus. The present invention is also applicable even when an information processing program for implementing some of the functions of the exemplary embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program that causes a computer to execute processing steps included in the above-described exemplary embodiments.

**Claims**

**1.**   A three-dimensional shaping apparatus (100, 1200) comprising:

an electron gun (1201, 101) that generates an electron beam (1207, 107) with which to heat powder (1204, 104) that forms at least one powder layer;

at least one electromagnetic deflector (1203, 103) that deflects the electron beam one- or two-dimensionally so as to scan and irradiate the at least one powder layer with the electron beam;

one or more electromagnetic lenses (1202, 1209, 102, 109) that are provided between said electron gun and said at least one electromagnetic deflector, and that focus the electron beam;

a deflector controller that is configured to control said at least one electromagnetic deflector so that said at least one electromagnetic deflector scans and irradiates with the electron beam either a region where the powder is melted or a region where the powder is not melted, and to control the scanning speed for the region where the powder is melted and for the region where the powder is not melted, and to thereby control the amount of heat given to the region where the powder is melted and to the region where the powder is not melted; and

a cross-sectional diameter controller that is configured to control at least one of said one or more electromagnetic lenses so that the focus of the electron beam is dynamically corrected, and to thereby control the cross-sectional diameter of the electron beam,

wherein said deflector controller is further configured to divide the process step of melting the powder with the electron beam into two process steps, namely the first melting step and the second melting step in the sequential order of the process steps;

and in that said deflector controller is further configured to, in the first melting step, cause said at least one electromagnetic deflector to scan and irradiate with the electron beam at least one entire or partial region where the powder is melted so that each point in the at least one entire or partial region where the powder is melted is given the amount of unit-area heat necessary to raise the temperature of the powder from its preheating temperature to its melting point;

and in that said deflector controller is further configured to, in the second melting step, cause said at least one electromagnetic deflector to scan and irradiate with the electron beam the at least one entire or partial region where the powder is melted so that each point in the at least one entire or partial region where the powder is melted is given an amount of unit-area heat not smaller than the amount of unit-area heat necessary for the powder to melt by receiving its melting heat;

and the three-dimensional shaping apparatus being **characterized in that** said cross-sectional diameter controller is further configured to cause at least one of said one or more electromagnetic lenses to set the cross-sectional diameter of the electron beam in the second melting step to be larger than the cross-sectional diameter of the electron beam in the first melting step, so that the powder is given a smaller amount of unit-area power of the electron beam in the second melting step than in the first melting step.

2. The three-dimensional shaping apparatus according to claim 1, wherein said deflector controller is also configured to, in the second melting step, cause said at least one electromagnetic deflector to scan and irradiate with the electron beam at least one entire or partial region where the powder is not melted.

3. The three-dimensional shaping apparatus according to claim 1 or 2, wherein said cross-sectional diameter controller is further configured to determine the time taken for the heat given by the electron beam to the powder to diffuse in the direction of the thickness of the at least one powder layer, based on the individual thickness of the at least one powder layer and the thermal diffusion coefficient of the at least one powder layer, and to determine the cross-sectional diameter of the electron beam in the second melting step so that the irradiation time necessary to melt the powder at each point irradiated with the electron beam in the second melting step is longer than the time taken for the heat to diffuse in the direction of the thickness of the at least one powder layer.

4. The three-dimensional shaping apparatus according to any one of claims 1 to 3, wherein said deflector controller is further configured to cause said at least one electromagnetic deflector to perform with the electron beam a predetermined number of rounds of multiple scanning and irradiation of the at least one entire or partial region where the powder is melted.

5. The three-dimensional shaping apparatus according to claim 4, wherein
said at least one electromagnetic deflector comprises at least two electromagnetic deflectors,
the electromagnetic deflector that has the higher or highest scanning speed of said at least two electromagnetic deflectors being a sub-deflector, and the rest of said at least two electromagnetic deflectors being a main deflector or main deflectors, and
said deflector controller is further configured to
cause the main deflector or main deflectors to move the deflection area of the sub-deflector,
cause the sub-deflector to scan the deflection area with the electron beam, and
cause the main deflector or main deflectors and the sub-deflector to perform with the electron beam the multiple scanning and irradiation of the at least one entire or partial region where the powder is melted.

6. The three-dimensional shaping apparatus according to claim 4 or 5, wherein
said deflector controller is further configured to, during the predetermined number of rounds of multiple scanning and irradiation, cause said at least one electromagnetic deflector to scan and irradiate with the electron beam the at least one entire or partial region where the powder is melted, so that each point in the at least one entire or partial region where the powder is melted is, after a predetermined waiting time after each round of irradiation, given the subsequent round of irradiation, the predetermined waiting time being not shorter than the time taken for the heat given by the electron beam to the powder to diffuse in the direction of the thickness of the at least one powder layer.

7. The three-dimensional shaping apparatus according to claim 6, wherein said deflector controller is further configured to, during the predetermined waiting time, cause said at least one electromagnetic deflector to scan and irradiate with the electron beam the at least one entire or partial region where the powder is melted, so that, of all points in the at least one entire region where the powder is melted, the points other than the point irradiated immediately before the start of the predetermined waiting time are irradiated successively.

8. The three-dimensional shaping apparatus according to any one of claims 1 to 7, wherein said deflector controller is further configured to, when melting the powder with the electron beam, control said at least one electromagnetic deflector through at least one electric current, so that the total amount of unit-area heat given to the powder as a result of the first melting step and the second melting step is larger than the sum of the amount of unit-area heat necessary to raise the temperature of the powder from its preheating temperature to its melting point and the amount of unit-area heat necessary for the powder to melt by receiving its melting heat.

**Patentansprüche**

1. Dreidimensionale Formgebungsvorrichtung (100, 1200) mit:

einer Elektronenkanone (1201, 101), die einen Elektronenstrahl (1207, 107) mit dem ein Pulver (1204, 104), das zumindest eine Pulverschicht bildet, zu erwärmen ist;
zumindest einer elektromagnetischen Ablenkeinheit (1203, 103), die den Elektronenstrahl ein- oder zweidimensional ablenkt, sodass er die zumindest eine Pulverschicht mit dem Elektronenstrahl abtastet und bestrahlt;
einer oder mehreren elektromagnetischen Linsen (1202, 1209, 102, 109), die zwischen der Elektronenkanone und der zumindest einen elektromagnetischen Ablenkeinheit bereitgestellt sind, und die den Elektronenstrahl fokussieren;
einer Ablenksteuerungseinheit, die konfiguriert ist, die zumindest eine elektromagnetische Ablenkeinheit so zu steuern, dass die zumindest eine elektromagnetische Ablenkeinheit entweder ein Gebiet, in dem das Pulver geschmolzen ist, oder ein Gebiet, in dem das Pulver nicht geschmolzen ist, abtastet und bestrahlt, und die Abtastgeschwindigkeit für das Gebiet, in dem das Pulver geschmolzen ist, und für das Gebiet, in dem das Pulver nicht geschmolzen ist, zu steuern, um dadurch die Wärmemenge, die dem Gebiet zugeführt wird, in dem das Pulver geschmolzen ist, und dem Gebiet, in dem das Pulver nicht geschmolzen ist, zugeführt wird, zu steuern; und
einer Querschnittsdurchmessersteuerungseinheit, die konfiguriert ist, zumindest eine der einen oder mehreren elektromagnetischen Linsen so zu steuern, dass der Fokus des Elektronenstrahls dynamisch korrigiert wird, und dadurch den Querschnittsdurchmesser des Elektronenstrahls zu steuern, wobei
die Ablenksteuerungseinheit ferner konfiguriert ist, den Prozessschritt des Schmelzens des Pulvers mit dem Elektronenstrahl in zwei Prozessschritte aufzuteilen, nämlich den ersten Schmelzschritt und den zweiten Schmelzschritt in der Reihenfolge der Prozessschritte; und
die Ablenksteuerungseinheit ferner konfiguriert ist, in dem ersten Schmelzschritt die zumindest eine elektromagnetische Ablenkeinheit zu veranlassen, zumindest ein ganzes oder ein Teilgebiet, in dem das Pulver geschmolzen ist, so abzutasten und mit dem Elektronenstrahl zu bestrahlen, dass jeder Punkt in dem zumindest einen ganzen oder Teilgebiet, in dem das Pulver geschmolzen ist, die Menge an Einheitsflächenwärme zugeführt wird, die nötig ist, um die Temperatur des Pulvers von seiner Temperatur vor dem Erwärmen zu seinem Schmelzpunkt zu erhöhen; und
die Ablenksteuerungseinheit ferner konfiguriert ist, in dem zweiten Schmelzschritt zu veranlassen, dass die zumindest eine elektromagnetische Ablenkeinheit das zumindest eine ganze oder Teilgebiet, in dem das Pulver geschmolzen ist, so abzutasten und mit dem Elektronenstrahl zu bestrahlen, dass jeder Punkt in dem zumindest einen ganzen oder Teilgebiet, in dem das Pulver geschmolzen ist, eine Wärmemenge pro Einheitsfläche zugeführt wird, die nicht kleiner ist als die Wärmemenge pro Einheitsfläche ist, die nötig ist, um das Pulver durch Empfangen seiner Schmelzwärme zu schmelzen; und

die dreidimensionale Formgebungsvorrichtung **dadurch gekennzeichnet ist, dass** die Querschnittsdurchmessersteuerungseinheit ferner konfiguriert ist, eine der einen oder mehreren elektromagnetischen Linsen zu veranlassen, den Querschnittsdurchmesser des Elektronenstrahls in dem zweiten Schmelzschritt größer als den Querschnittsdurchmesser des Elektronenstrahls in dem ersten Schmelzschritt einzustellen, sodass dem Pulver eine kleinere Leistungsmenge pro Einheitsfläche des Elektronenstrahls in dem zweiten Schmelzschritt als in dem ersten Schmelzschritt zugeführt wird.

2. Dreidimensionale Formgebungsvorrichtung nach Anspruch 1, wobei die Ablenksteuerungseinheit auch konfiguriert ist, in dem zweiten Schmelzschritt die zumindest eine elektromagnetische Ablenkeinheit zu veranlassen, mit dem Elektronenstrahl zumindest ein ganzes oder ein Teilgebiet, in dem das Pulver nicht geschmolzen ist, abzutasten und mit dem Elektronenstrahl zu bestrahlen.

3. Dreidimensionale Formgebungsvorrichtung nach Anspruch 1 oder 2, wobei die Querschnittsdurchmessersteuerungseinheit ferner konfiguriert ist, die Zeit, die dafür benötigt wird, die Wärme, die durch den Elektronenstrahl dem Pulver zugeführt wird, in der Richtung der Dicke der zumindest einen Pulverschicht zu diffundieren, basierend auf der individuellen Dicke der zumindest einen Pulverschicht und dem thermischen Diffusionskoeffizienten der zumindest einen Pulverschicht zu bestimmen, und den Querschnittsdurchmesser des Elektronenstrahls in dem zweiten Schmelzschritt so zu bestimmen, dass die Bestrahlungszeit, die nötig ist, um das Pulver an jedem Punkt, der mit dem Elektronenstrahl in dem zweiten Schmelzschritt bestrahlt wird, zu schmelzen, länger als die Zeit ist, die von der Wärme benötigt wird, um in der Richtung der Dicke der zumindest einen Pulverschicht zu diffundieren.

4. Dreidimensionale Formgebungsvorrichtung nach einem der Ansprüche 1 bis 3, wobei die Ablenkungssteuerungseinheit ferner konfiguriert ist, die zumindest eine elektromagnetische Ablenkeinheit zu veranlassen, mit dem Elektronenstrahl eine vorbestimmte Anzahl von Runden von mehrfachem Abtasten und Bestrahlen des zumindest einen ganzen oder Teilgebiet, in dem das Pulver geschmolzen ist, durchzuführen.

5. Dreidimensionale Formgebungsvorrichtung nach Anspruch 4, wobei

die zumindest eine elektromagnetische Ablenkeinheit zumindest zwei elektromagnetische Ablenkeinheiten aufweist,

die elektromagnetische Ablenkeinheit, die die größere oder größte Abtastgeschwindigkeit der zumindest zwei elektromagnetischen Ablenkeinheiten hat, eine Unterablenkeinheit ist, und der Rest der zumindest zwei elektromagnetischen Ablenkeinheiten eine Hauptablenkeinheit oder Hauptablenkeinheiten sind, und die Ablenksteuerungseinheit ferner konfiguriert ist,

die Hauptablenkeinheit oder Hauptablenkeinheiten zu veranlassen, das Ablenkgebiet der Unterablenkeinheit zu bewegen,

die Unterablenkeinheit zu veranlassen, die Ablenkfläche mit dem Elektronenstrahl abzutasten, und die Hauptablenkeinheit oder Hauptablenkeinheiten und die Unterablenkeinheit zu veranlassen, mit dem Elektronenstrahl das mehrfache Abtasten und Bestrahlen des zumindest einen ganzen oder Teilgebiets, in dem das Pulver geschmolzen ist, durchzuführen.

6. Dreidimensionale Formgebungsvorrichtung nach Anspruch 4 oder 5, wobei

die Ablenksteuerungseinheit ferner konfiguriert ist, während der vorbestimmten Anzahl von Runden des mehrfachen Abtastens und Bestrahlens die zumindest eine elektromagnetische Ablenkeinheit zu veranlassen, mit dem Elektronenstrahl das zumindest eine ganze oder Teilgebiet, in dem das Pulver geschmolzen ist, abzutasten und zu bestrahlen, sodass jeder Punkt in dem zumindest einen ganzen oder Teilgebiet, in dem das Pulver geschmolzen ist, nach einer vorbestimmten Wartezeit nach jeder Runde der Bestrahlung bei der nachfolgenden Runde der Bestrahlung die vorbestimmte Wartezeit gegeben wird, die nicht kürzer als die Zeit ist, die benötigt wird, damit die Wärme, die durch den Elektronenstrahl dem Pulver zugeführt wird, in der Richtung der Dicke der zumindest einen Pulverschicht diffundiert.

7. Dreidimensionale Abtastvorrichtung nach Anspruch 6, wobei die Ablenksteuerungseinheit ferner konfiguriert ist, während der vorbestimmten Wartezeit die zumindest eine elektromagnetische Abtasteinheit zu veranlassen, dass zumindest eine ganze oder Teilgebiet, in dem das Pulver geschmolzen ist, so abzutasten und mit dem Elektronenstrahl zu bestrahlen, dass von allen Punkten in dem zumindest einen ganzen Gebiet, in dem das Pulver geschmolzen ist, die Punkte, die verschieden sind von dem Punkt, der unmittelbar vor dem Start der vorbestimmten Wartezeit bestrahlt wurde, nacheinander bestrahlt werden.

8. Dreidimensionale Formgebungsvorrichtung nach einem der Ansprüche 1 bis 7, wobei die Ablenksteuerungseinheit ferner konfiguriert ist, wenn das Pulver mit dem Elektronenstrahl geschmolzen wird, die zumindest eine elektromagnetische Ablenkeinheit durch zumindest einen elektrischen Strom so zu steuern, dass die Gesamtmenge an Wärme pro Einheitsfläche, die dem Pulver als ein Ergebnis des ersten Schmelzschritts und des zweiten Schmelzschritts zugeführt wird, größer als die Summe der Wärmemenge pro Einheitsfläche ist, die nötig ist, um die Temperatur des Pulvers von seiner Temperatur vor dem Erwärmen zu seinem Schmelzpunkt zu erhöhen, und der Wärmemenge pro Einheitsfläche, die nötig ist, um das Pulver durch Empfangen seiner Schmelzwärme zu erhöhen.

**Revendications**

1. Appareil de mise en forme tridimensionnelle (100, 1200) qui comprend :

un canon à électrons (1201, 101) qui génère un faisceau d'électrons (1207, 107) avec lequel une poudre (1204, 104) qui forme au moins une couche de poudre est chauffée ;
au moins un déflecteur électromagnétique (1203, 103) qui défléchit le faisceau d'électrons de manière unidimensionnelle ou bidimensionnelle de façon à balayer et irradier ladite au moins une couche de poudre avec le faisceau d'électrons ;
une ou plusieurs lentilles électromagnétiques (1202, 1209, 102, 109) qui sont prévues entre ledit canon à électrons et ledit au moins un déflecteur électromagnétique, et qui focalisent le faisceau d'électrons ;
un contrôleur de déflecteur qui est configuré pour commander ledit au moins un déflecteur électromagnétique de sorte que ledit au moins un déflecteur électromagnétique balaye et irradie avec le faisceau d'électrons soit une région où la poudre est fondue, soit une région où la poudre n'est pas fondue, et pour commander la vitesse de balayage pour la région où la poudre est fondue et pour la région où la poudre n'est pas fondue, et pour de ce fait commander la quantité de chaleur communiquée à la région où la poudre est fondue et à la région où la poudre n'est pas fondue ; et
un contrôleur de diamètre en section transversale qui est configuré pour commander au moins l'une desdites une ou plusieurs lentilles électromagnétiques de sorte que le foyer du faisceau d'électrons soit corrigé dynamiquement, et pour de ce fait commander le diamètre en section transversale du faisceau d'électrons, dans lequel
ledit contrôleur de déflecteur est en outre configuré pour diviser l'étape de processus pour fondre la poudre avec le faisceau d'électrons en deux étapes de processus, à savoir la première étape de fusion et la deuxième étape de fusion dans l'ordre séquentiel des étapes de processus ;
et en ce que ledit contrôleur de déflecteur est en outre configuré pour, au cours de la première étape de fusion, amener ledit au moins un déflecteur électromagnétique à balayer et irradier avec le faisceau d'électrons au moins une région entière ou partielle où la poudre est fondue de sorte que chaque point dans ladite au moins une région entière ou partielle où la poudre est fondue reçoive la quantité de chaleur par unité de surface nécessaire pour élever la température de la poudre de sa température de préchauffage à son point de fusion ;
et en ce que ledit contrôleur de déflecteur est en outre configuré pour, au cours de la deuxième étape de fusion, amener ledit au moins un déflecteur électromagnétique à balayer et irradier avec le faisceau d'électrons ladite au moins une région entière ou partielle où la poudre est fondue de sorte que chaque point dans ladite au moins une région entière ou partielle où la poudre est fondue reçoive une quantité de chaleur par unité de surface qui n'est pas inférieure à la quantité de chaleur par unité de surface nécessaire pour que la poudre fonde en recevant sa chaleur de fusion ;
et l'appareil de mise en forme tridimensionnelle étant **caractérisé en ce que** ledit contrôleur de diamètre en section transversale est en outre configuré pour amener au moins l'une desdites une ou plusieurs lentilles électromagnétiques à établir le diamètre en section transversale du faisceau d'électrons au cours de la deuxième étape de fusion à une valeur supérieure au diamètre en section transversale du faisceau d'électrons au cours de la première étape de fusion, de sorte que la poudre reçoive une plus petite quantité de puissance par unité de surface du faisceau d'électrons au cours de la deuxième étape de fusion qu'au cours de la première étape de fusion.

2. Appareil de mise en forme tridimensionnelle selon la revendication 1, dans lequel ledit contrôleur de déflecteur est également configuré pour, au cours de la deuxième étape de fusion, amener ledit au moins un déflecteur électromagnétique à balayer et irradier avec le faisceau d'électrons au moins une région entière ou partielle où la poudre n'est pas fondue.

3. Appareil de mise en forme tridimensionnelle selon la revendication 1 ou 2, dans lequel ledit contrôleur de diamètre en section transversale est en outre configuré pour déterminer le temps nécessaire pour que la chaleur communiquée par le faisceau d'électrons à la poudre se diffuse dans la direction de l'épaisseur de ladite au moins une couche de poudre, sur la base de l'épaisseur individuelle de ladite au moins une couche de poudre et du coefficient de diffusion thermique de ladite au moins une couche de poudre, et pour déterminer le diamètre en section transversale du faisceau d'électrons au cours de la deuxième étape de fusion de sorte que le temps d'irradiation nécessaire pour fondre la poudre au niveau de chaque point irradié par le faisceau d'électrons au cours de la deuxième étape de fusion soit plus long que le temps nécessaire pour que la chaleur se diffuse dans la direction de l'épaisseur de ladite au moins une couche de poudre.

4. Appareil de mise en forme tridimensionnelle selon l'une quelconque des revendications 1 à 3, dans lequel ledit contrôleur de déflecteur est en outre configuré pour amener ledit au moins un déflecteur électromagnétique à effectuer avec le faisceau d'électrons un nombre prédéterminé de tours de multiples balayages et irradiations de ladite au moins une région entière ou partielle où la poudre est fondue.

5. Appareil de mise en forme tridimensionnelle selon la revendication 4, dans lequel
   ledit au moins un déflecteur électromagnétique comprend au moins deux déflecteurs électromagnétiques,
   le déflecteur électromagnétique qui a la vitesse de balayage plus élevée ou la plus élevée desdits au moins deux déflecteurs électromagnétiques étant un déflecteur secondaire, et le reste desdits au moins deux déflecteurs électromagnétiques étant un déflecteur principal ou des déflecteurs principaux, et
   ledit contrôleur de déflecteur est en outre configuré pour
   amener le déflecteur principal ou les déflecteurs principaux à déplacer la zone de déflexion du déflecteur secondaire,
   amener le déflecteur secondaire à balayer la zone de déflexion avec le faisceau d'électrons, et
   amener le déflecteur principal ou les déflecteurs principaux et le déflecteur secondaire à effectuer avec le faisceau d'électrons les multiples balayages et irradiations de ladite au moins une région entière ou partielle où la poudre est fondue.

6. Appareil de mise en forme tridimensionnelle selon la revendication 4 ou 5, dans lequel
   ledit contrôleur de déflecteur est en outre configuré pour, pendant le nombre prédéterminé de tours de multiples balayages et irradiations, amener ledit au moins un déflecteur électromagnétique à balayer et irradier avec le faisceau d'électrons ladite au moins une région entière ou partielle où la poudre est fondue, de sorte que chaque point dans ladite au moins une région entière ou partielle où la poudre est fondue reçoive, après un temps d'attente prédéterminé après chaque tour d'irradiation, le tour suivant d'irradiation, le temps d'attente prédéterminé n'étant pas plus court que le temps nécessaire pour que la chaleur communiquée par le faisceau d'électrons à la poudre se diffuse dans la direction de l'épaisseur de ladite au moins une couche de poudre.

7. Appareil de mise en forme tridimensionnelle selon la revendication 6, dans lequel ledit contrôleur de déflecteur est en outre configuré pour, pendant le temps d'attente prédéterminé, amener ledit au moins un déflecteur électromagnétique à balayer et irradier avec le faisceau d'électrons ladite au moins une région entière ou partielle où la poudre est fondue, de sorte que, parmi tous les points dans ladite au moins une région entière où la poudre est fondue, les points autres que le point irradié immédiatement avant le début du temps d'attente prédéterminé soient irradiés successivement.

8. Appareil de mise en forme tridimensionnelle selon l'une quelconque des revendications 1 à 7, dans lequel ledit contrôleur de déflecteur est en outre configuré pour, lors de la fusion de la poudre avec le faisceau d'électrons, commander ledit au moins un déflecteur électromagnétique par au moins un courant électrique, de sorte que la quantité totale de chaleur par unité de surface communiquée à la poudre en conséquence de la première étape de fusion et de la deuxième étape de fusion soit supérieure à la somme de la quantité de chaleur par unité de surface nécessaire pour élever la température de la poudre de sa température de préchauffage à son point de fusion et de la quantité de chaleur par unité de surface nécessaire pour que la poudre fonde en recevant sa chaleur de fusion.

# F I G. 1

A   B

203

SUB-DEFLECTION FIELD **201**

TRAJECTORY OF SCAN
BY SUB-DEFLECTOR **108**

Y

X

203

203

SMALL REGION **202**
(ONE-DIMENSIONAL GRID)

# F I G.  2

SUB-DEFLECTION FIELD **201**

TRAJECTORY OF MOVEMENT OF
SUB-DEFLECTION FIELD **201**
BY MAIN DEFLECTOR **103**

# F I G. 3

Y

X

SUB-DEFLECTION FIELD **201**

TRAJECTORY OF SCAN
BY SUB-DEFLECTOR **108**

SMALL REGION **202**
(ONE-DIMENSIONAL GRID)

# F I G.  4

TEMPERATURE T[℃]

MELTING POINT

PREHEATING
TEMPERATURE

X

F I G. 5A

F I G. 5B

FIRST COLUMN SECOND COLUMN THIRD COLUMN

SUB-DEFLECTION FIELD **201**

Y
X

SMALL REGION **202**
(ONE-DIMENSIONAL GRID)

F I G.  6

THICKNESS OF
HEAT GENERATING
PART **411a**

Z

DEEPEST
PART 411**c**
(HEAT INSULATED)

OUTERMOST
PART 411**b**
(HEAT INSULATED)

THICKNESS OF LAYERED MATERIAL **401**
(THICKNESS OF POWDER LAYER)

# F I G. 7

**F I G.  8A**

TEMPERATURE T[°C]

MELTING POINT
(EUTECTIC POINT)

A          B          C

UNIT-VOLUME HEAT [J/cm³]

F I G.   8B

F I G. 9

F I G. 10A

**F I G. 10B**

START

S1101 — LOAD SHAPE DATA AND SHAPING CONDITION DATA FOR ONE POWDER LAYER

S1103 — SPREAD METAL POWDER OVER SHAPING SURFACE

S1105 — SCAN AND IRRADIATE METAL POWDER WITH ELECTRON BEAM (PREHEATING STEP)

S1107 — SCAN AND IRRADIATE METAL POWDER WITH ELECTRON BEAM (FIRST MELTING STEP)

S1109 — INCREASE CROSS-SECTIONAL DIAMETER OF ELECTRON BEAM

S1111 — SCAN AND IRRADIATE METAL POWDER WITH ELECTRON BEAM (SECOND MELTING STEP)

S1113 — DECREASE CROSS-SECTIONAL DIAMETER OF ELECTRON BEAM TO ORIGINAL DIAMETER

S1115 — HAS SCANNING AND IRRADIATION OF ALL LAYERS BEEN COMPLETED?

NO

S1117 — MOVE Z-AXIS STAGE

YES

END

F I G. 11A

START (**S1105, S1107, S1111**)

S1121

MOVE SUB-DEFLECTION FILED TO
PREDETERMINED REGION

S1123

SCAN AND IRRADIATE SMALL REGION
IN SUB-DEFLECTION FIELD
WITH ELECTRON BEAM

S1125

HAS SCANNING AND
IRRADIATION OF ALL SMALL REGIONS
IN PREDETERMINED REGION BEEN
COMPLETED?

NO

S1127

MOVE SUB-DEFLECTION FIELD TO
WHERE ANOTHER SMALL REGION IS
LOCATED

YES

END

F I G.  11B

**F I G. 12A**

START

**S1201** LOAD SHAPE DATA AND SHAPING CONDITION DATA FOR ONE POWDER LAYER

**S1203** SPREAD METAL POWDER OVER SHAPING SURFACE

**S1205** SCAN AND IRRADIATE METAL POWDER WITH ELECTRON BEAM (PREHEATING PROCESS)

**S1207** SCAN AND IRRADIATE METAL POWDER WITH ELECTRON BEAM (MELTING PROCESS)

**S1209** HAS SCANNING AND IRRADIATION OF ALL LAYERS BEEN COMPLETED?

NO

**S1211** MOVE Z-AXIS STAGE

YES

END

**F I G.  12B**

**EP 3 360 626 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003531034 W
- WO 2001081031 A
- EP 3059031 A1
- WO 2016087653 A